# EUROPEAN PATENT APPLICATION

(11) **EP 4 746 362 A1**
(43) Date of publication of application: **20.05.2026**
(21) Application number: 24840057.4
(22) Date of filing: 09.07.2024
(51) Int. Cl.: H04L 41/0833, H04L 47/83, H04L 41/0894, H04W 76/18, H04W 76/30, H04L 43/16

(54) **METHOD FOR PROVIDING SERVICE ACCORDING TO ENERGY CONSUMPTION**

(30) Priority: 10.07.2023 US 202363525720 P
(71) Applicant: LG Electronics Inc., Yeongdeungpo-gu Seoul 07336 (KR)
(72) Inventor: KIM, Laeyoung, Seoul 06772 (KR); YOUN, Myungjune, Seoul 06772 (KR)
(74) Representative: Mooser, Sebastian Thomas
(86) International application number: PCT/KR2024/009750
(87) International publication number: WO 2025/014246

(57) **Abstract**

One disclosure of the present disclosure provides a method by which a UE communicates. The method comprises the steps of: establishing an SM policy association with a session management function (SM) for a packet data unit (PDU) session for a user equipment (UE); transmitting an energy-related request to a specific NF; receiving, from the NF, energy information on energy consumption due to a service related to the PDU session exceeding a specific threshold value, wherein the energy information is information determined by the NF on the basis of the energy-related request; and transmitting, to the SMF, an instruction for restricting the PDU session on the basis of the energy information.

## Description

### TECHNICAL FIELD

The present specification relates to mobile communications.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

A method of providing services according to energy consumption is needed.

### DESCLOSURE

### TECHNICAL SOLUTION

If energy consumption exceeds the allowed value, related services are restricted.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 is a block diagram of a next generation cellular network.
FIG. 5 illustrates an example 5G system structure to which an implementation of the present specification may be applied.
FIGS. 6 and 7 show an example of a registration procedure to which implementations of the present disclosure is applied.
FIGS. 8 and 9 show an example of a PDU session establishment procedure to which implementations of the present disclosure is applied.
FIG. 10 shows a flowchart according to the first embodiment of the present specification.
FIG. 11 shows a flowchart according to the tenth embodiment of the present specification.
FIG. 12 shows the procedure of the PCF according to disclosure of the present specification.
FIG. 13 shows the procedure of the UE according to disclosure of the present specification.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

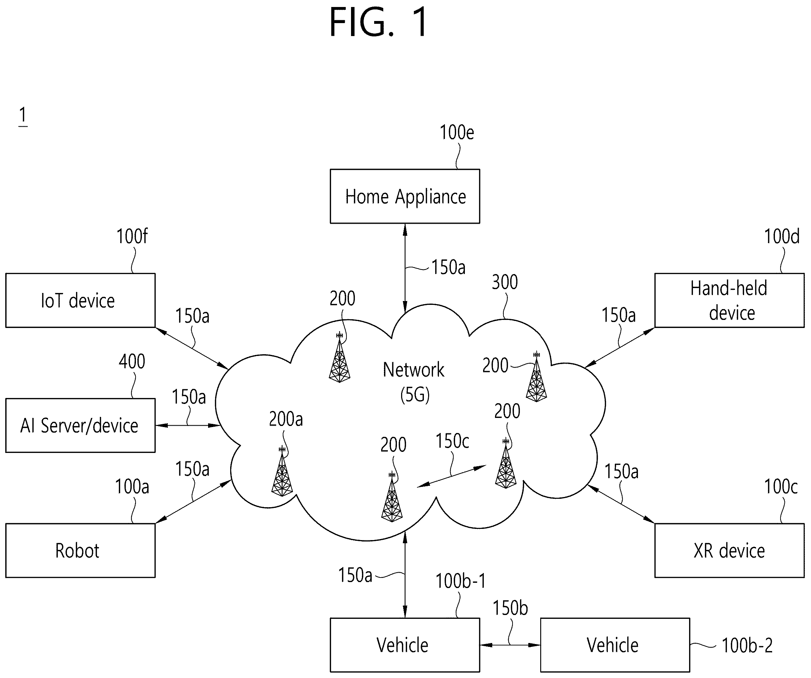

**FIG. 1** **shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/SG devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | *15,* 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | *15,* 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

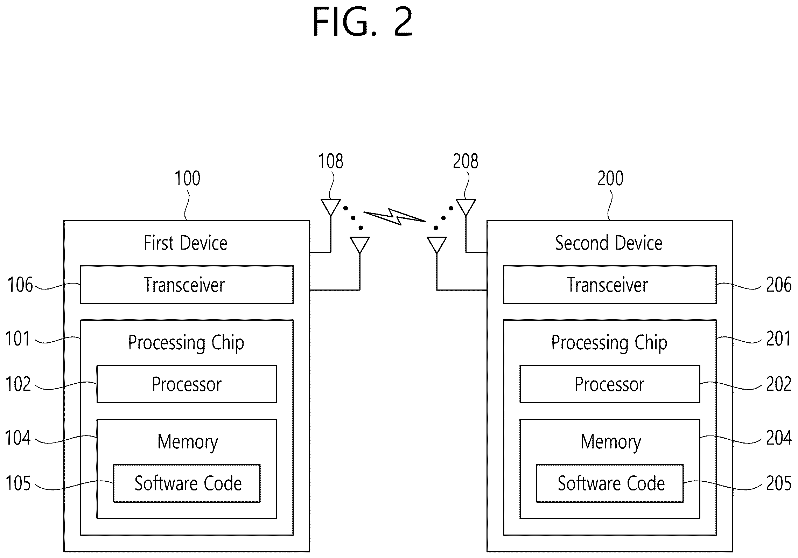

**FIG. 2** **shows an example of wireless devices to which implementations of the present disclosure is applied.**

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor.

The one or more memories 104, 204 may be associated with the one or more processors 102, 202 and may store various forms of data, signals, messages, information, programs, codes, instructions, and/or commands. The one or more memories 104, 204 may comprise random access memory (RAM), dynamic RAM (DRAM), read-only memory (ROM), erasable programmable ROM (EPROM), flash memory, volatile memory, non-volatile memory, hard drives, registers, cache memory, computer-readable storage media, and/or combinations thereof. The one or more memories 104, 204 may be located inside and/or outside of the one or more processors 102, 202. Further, the one or more memories 104, 204 may be coupled to the one or more processors 102, 202 via various technologies, such as wired or wireless connections.

The one or more transceivers 106, 206 may transmit user data, control information, wireless signals/channels, etc. referred to in the descriptions, features, procedures, suggestions, methods, and/or flowcharts of operation disclosed herein to one or more other devices. The one or more transceivers 106, 206 may receive user data, control information, wireless signals/channels, etc. referred to in the descriptions, features, procedures, suggestions, methods, and/or flowcharts of operation disclosed herein from one or more other devices. For example, the one or more transceivers 106, 206 may be associated with the one or more processors 102, 202 and may transmit and receive wireless signals. For example, the one or more processors 102, 202 may control the one or more transceivers 106, 206 to transmit user data, control information, wireless signals, etc. to one or more other devices. Further, the one or more processors 102, 202 may control the one or more transceivers 106, 206 to receive user data, control information, wireless signals, etc. from the one or more other devices.

The one or more transceivers 106, 206 may be associated with one or more antennas 108, 208. Additionally and/or alternatively, the one or more transceivers 106, 206 may include one or more antennas 108, 208. The one or more transceivers 106, 206 may be configured to transmit and receive, via the one or more antennas 108, 208, user data, control information, wireless signals/channels, etc. referred to in the descriptions, features, procedures, suggestions, methods, and/or flowcharts of operation disclosed herein. As used herein, the one or more antennas 108, 208 may be a plurality of physical antennas, or a plurality of logical antennas (e.g., antenna ports).

The one or more transceivers 106, 206 may convert the received user data, control information, radio signals/channels, etc. from RF band signals to baseband signals in order to process the received user data, control information, radio signals/channels, etc. using the one or more processors 102, 202. The one or more transceivers 106, 206 may convert the processed user data, control information, radio signals/channels, etc. from baseband signals to RF band signals using the one or more processors 102, 202. To do so, the one or more transceivers 106, 206 may include (analog) oscillators and/or filters. For example, the one or more transceivers 106, 206 may up-convert an OFDM baseband signal to an OFDM signal via an (analog) oscillator and/or filter under the control of the one or more processors 102, 202, and transmit the up-converted OFDM signal at the carrier frequency. The one or more transceivers 106, 206 may receive the OFDM signal at the carrier frequency and, under the control of the one or more processors 102, 202, down-convert the OFDM signal to an OFDM baseband signal via an (analog) oscillator and/or filter.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

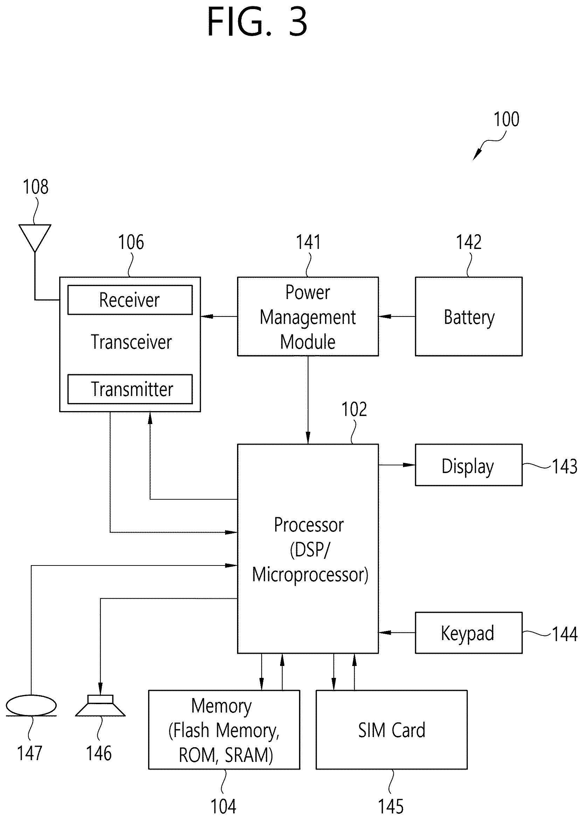

**FIG. 3** **shows an example of UE to which implementations of the present disclosure is applied.**

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

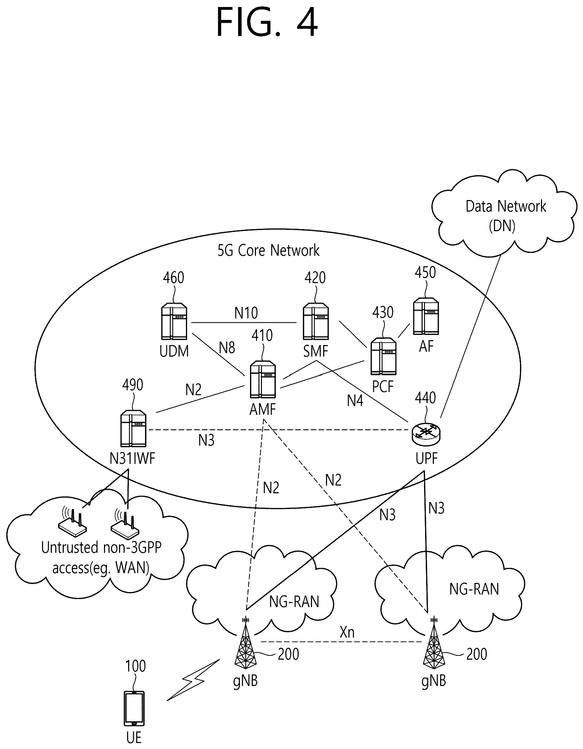

**FIG. 4** **is a block diagram of a next generation cellular network.**

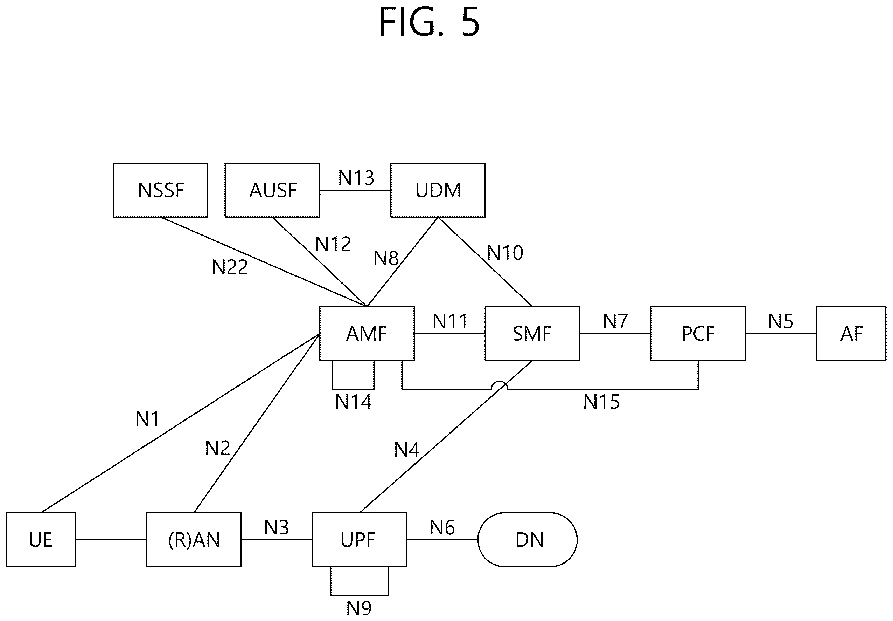

The 5G Core (5GC) may include a variety of components, some of which are shown in FIG. 5, such as the Access and Mobility Management Function (AMF) (410), the Session Management Function (SMF) (420), the Policy Control Function (PCF) (430), the User Plane Function (UPF) (440), the Application Function (AF) (450), the UDF (UDF) (450), and the UDF (UDF) (450): Policy Control Function (PCF) (430), User Plane Function (UPF) (440), Application Function (AF) (450), Unified Data Management (UDM) (460), and Non-3rd Generation Partnership Project (3GPP) Inter Working Function (N3IWF) (490).

The UE 100 is connected to the data network via the UPF 440 through a next generation radio access network (NG-RAN) including the gNB 20.

The UE 100 may also be provided data services via untrusted non-3GPP access, such as a wireless local area network (WLAN). To connect said non-3GPP access to the core network, a N3IWF 490 may be deployed.

The illustrated N3IWF 490 performs the function of managing the interworking between the non-3GPP access and the 5G system. When the UE 100 is associated with a non-3GPP access (e.g., WiFi, also referred to as IEEE 801.11), the UE 100 may be associated with the 5G system via the N3IWF 490. The N3IWF 490 communicates with the AMF 410 for control signaling and with the UPF 440 via the N3 interface for data transfer.

The illustrated AMF 410 may manage access and mobility in a 5G system. The AMF 410 may perform functions to manage Non-Access Stratum (NAS) security. The AMF 410 may perform functions to handle mobility in an idle state.

The UPF 440 shown is a type of gateway through which user data is transmitted and received. The UPF node 440 may perform all or part of the user plane functions of the Serving Gateway (S-GW) and Packet Data Network Gateway (P-GW) of fourth generation mobile communications.

The UPF 440 acts as a demarcation point between the next generation radio access network (NG-RAN) and the core network, and is the element that maintains the data path between the gNB 20 and the SMF 420. Additionally, the UPF 440 acts as a mobility anchor point when the UE 100 moves across the area served by the gNB 20. The UPF 440 may perform functions to handle PDUs. For mobility within the NG-RAN (Next Generation-Radio Access Network as defined in 3GPP Release-15 and later), the UPF may route packets. The UPF 440 may also function as an anchor point for mobility with other 3GPP networks (RANs defined prior to 3GPP Release-15, e.g., UTRAN, E-UTRAN (Evolved-UMTS (Universal Mobile Telecommunications System) Terrestrial Radio Access Network), or GERAN (Global System for Mobile Communication (GSM)/EDGE (Enhanced Data rates for Global Evolution) Radio Access Network). The UPF 440 may correspond to a termination point of the data interface to the data network.

The PCF 430 shown is a node that controls the operator's policies.

The AF 450 shown is a server for providing multiple services to the UE 100.

The UDM 460 shown is a type of server that manages subscriber information, such as a home subscriber server (HSS) in fourth generation mobile communications. The UDM 460 stores and manages subscriber information in a unified data repository (UDR).

The SMF 420 shown may perform the function of assigning an Internet Protocol (IP) address of a UE. The SMF 420 may also control protocol data unit (PDU) sessions.

As a point of reference, the drawing symbols for AMF 410, SMF 420, PCF 430, UPF 440, AF 450, UDM 460, N3IWF 490, gNB 20, or UE 100 may be omitted herein.

Fifth generation mobile communications supports multiple numerologies or subcarrier spacings (SCS) to support various 5G services. For example, an SCS of 15 kHz supports wide area coverage in traditional cellular bands; an SCS of 30 kHz/60 kHz supports dense-urban, lower latency, and wider carrier bandwidth; and an SCS of 60 kHz or higher supports bandwidths greater than 24.25 GHz to overcome phase noise.

**FIG. 5** **illustrates an example 5G system structure to which an implementation of the present specification may be applied.**

The 5G system (SGS; 5G system) structure consists of the following network functions (NFs).
- AUSF (Authentication Server Function)
- AMF (Access and Mobility Management Function)
- DN (Data Network), e.g., operator services, internet access or third-party services
- USDF (Unstructured Data Storage Function)
- NEF (Network Exposure Function)
- I-NEF (Intermediate NEF)
- NRF (Network Repository Function)
- NSSF (Network Slice Selection Function)
- PCF (Policy Control Function)
- SMF (Session Management Function)
- UDM (Unified Data Management)
- UDR (Unified Data Repository)
- UPF (User Plane Function)
- UCMF (UE radio Capability Management Function)
- AF (Application Function)
- UE (User Equipment)
- (R)AN ((Radio) Access Network)
- 5G-EIR (5G-Equipment Identity Register)
- NWDAF (Network Data Analytics Function)
- CHF (Charging Function)

In addition, the following network functions may be considered.
- N3IWF (Non-3GPP InterWorking Function)
- TNGF (Trusted Non-3GPP Gateway Function)
- W-AGF (Wireline Access Gateway Function)

FIG. 5 shows the 5G system structure of a non-roaming case using a reference point representation that shows how various network functions interact with each other.

In FIG. 5, UDSF, NEF and NRF are not described for clarity of the point-to-point diagram. However, all network functions shown may interact with UDSF, UDR, NEF and NRF as needed.

For clarity, the connection between the UDR and other NFs (e.g., PCFs) is not shown in FIG. 5. For clarity, the connection between NWDAF and other NFs (e.g. PCFs) is not shown in FIG. 5.

The 5G system architecture includes the following reference points.
- N1: the reference point between the UE and the AMF.
- N2: reference point between (R)AN and AMF.
- N3: Reference point between (R)AN and UPF.
- N4: reference point between SMF and UPF.
- N6: Reference point between UPF and data network.
- N9: reference point between two UPFs.

The following reference points show the interactions that exist between NF services in NF.
- N5: Reference point between PCF and AF.
- N7: reference point between SMF and PCF.
- N8: reference point between UDM and AMF.
- N10: reference point between UDM and SMF.
- N11: reference point between AMF and SMF.
- N12: reference point between AMF and AUSF.
- N13: reference point between UDM and AUSF.
- N14: reference point between two AMFs.
- N15: Reference point between PCF and AMF in case of non-roaming scenario, and reference point between PCF and AMF of visited network in case of roaming scenario.
- N16: reference point between two SMFs (in case of roaming, between the SMF of the visited network and the SMF of the home network)
- N22: reference point between AMF and NSSF.

In some cases, it may be necessary to connect two NFs to each other to service the UE.

### <Registration procedure>

A registration procedure is described. Section 4.2.2.2 of 3GPP TS 23.502 V16.3.0 (2019-12) can be referred.

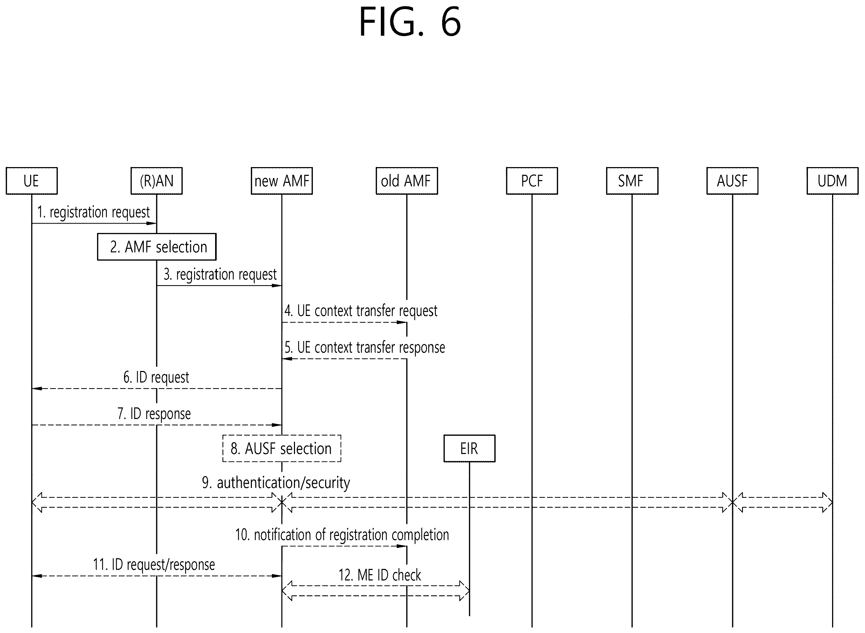

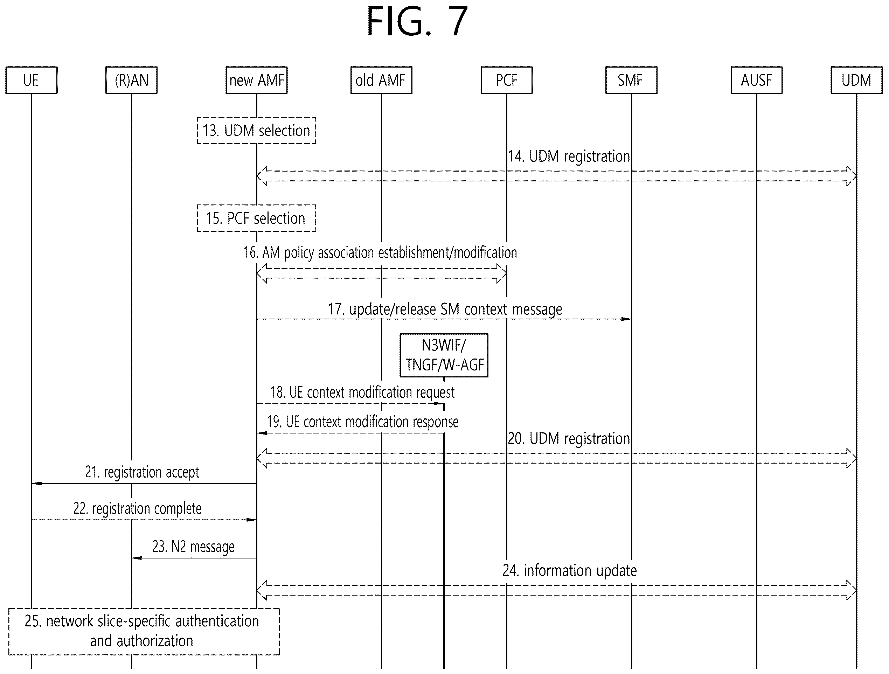

**FIGS. 6** **and** **7** **show an example of a registration procedure to which implementations of the present disclosure is applied.**

A UE needs to register with the network to get authorized to receive services, to enable mobility tracking and to enable reachability. The UE initiates the registration procedure using one of the following registration types:
- Initial registration to the 5GS; or
- Mobility registration update; or
- Periodic registration update; or
- Emergency registration.

The general registration procedure in FIGS. 6 and 7 applies on all these registration procedures, but the periodic registration update need not include all parameters that are used in other registration cases.

The general registration procedure in FIGS. 6 and 7 is also used for the case of registration in 3GPP access when the UE is already registered in a non-3GPP access, and vice versa. Registration in 3GPP access when the UE is already registered in a non-3GPP access scenario may require an AMF change.

First, procedures of FIG. 6 are described.
(1) Step 1: The UE transmits a Registration Request message to the (R)AN. The Registration Request message corresponds to AN message.

The Registration Request message may include AN parameters. In the case of NG-RAN, the AN parameters include, e.g., 5G SAE temporary mobile subscriber identity (5G-S-TMSI) or globally unique AMF ID (GUAMI), the selected public land mobile network (PLMN) ID (or PLMN ID and network identifier (NID)) and Requested network slice selection assistance information (NSSAI). The AN parameters also include establishment cause. The establishment cause provides the reason for requesting the establishment of an RRC connection. Whether and how the UE includes the Requested NSSAI as part of the AN parameters is dependent on the value of the access stratum connection establishment NSSAI inclusion mode parameter.

The Registration Request message may include a registration type. The registration type indicates if the UE wants to perform an initial registration (i.e., the UE is in RM-DEREGISTERED state), a mobility registration update (i.e., the UE is in RM-REGISTERED state and initiates a registration procedure due to mobility or due to the UE needs to update its capabilities or protocol parameters, or to request a change of the set of network slices it is allowed to use), a periodic registration update (i.e., the UE is in RM-REGISTERED state and initiates a registration procedure due to the periodic registration update timer expiry) or an emergency registration (i.e., the UE is in limited service state).

When the UE is performing an initial registration, the UE shall indicate its UE identity in the Registration Request message as follows, listed in decreasing order of preference:
i) a 5G globally unique temporary identifier (5G-GUTI) mapped from an evolved packet system (EPS) GUTI, if the UE has a valid EPS GUTI.
ii) a native 5G-GUTI assigned by the PLMN to which the UE is attempting to register, if available;
iii) a native 5G-GUTI assigned by an equivalent PLMN to the PLMN to which the UE is attempting to register, if available;
iv) a native 5G-GUTI assigned by any other PLMN, if available.
v) Otherwise, the UE shall include its subscriber concealed identifier (SUCI) in the Registration Request message.

When the UE performing an initial registration has both a valid EPS GUTI and a native 5G-GUTI, the UE shall also indicate the native 5G-GUTI as additional GUTI. If more than one native 5G-GUTIs are available, the UE shall select the 5G-GUTI in decreasing order of preference among items (ii)-(iv) in the list above.

When the UE is performing an initial registration with a native 5G-GUTI, then the UE shall indicate the related GUAMI information in the AN parameters. When the UE is performing an initial registration with its SUCI, the UE shall not indicate any GUAMI information in the AN parameters.

For an emergency registration, the SUCI shall be included if the UE does not have a valid 5G-GUTI available; the permanent equipment identifier (PEI) shall be included when the UE has no subscriber permanent identifier (SUPI) and no valid 5G-GUTI. In other cases, the 5G-GUTI is included and it indicates the last serving AMF.

The Registration Request message may also include security parameters, PDU Session Status, etc. The security parameters are used for authentication and integrity protection. The PDU Session Status indicates the previously established PDU sessions in the UE. When the UE is connected to the two AMFs belonging to different PLMN via 3GPP access and non-3GPP access then the PDU Session status indicates the established PDU Session of the current PLMN in the UE.

(2) Step 2: The (R)AN selects an AMF.

If a 5G-S-TMSI or GUAMI is not included or the 5G-S-TMSI or GUAMI does not indicate a valid AMF, the (R)AN, based on (R)AT and requested NSSAI, if available, selects an AMF.

If UE is in CM-CONNECTED state, the (R)AN can forward the Registration Request message to the AMF based on the N2 connection of the UE.

If the (R)AN cannot select an appropriate AMF, it forwards the Registration Request message to an AMF which has been configured, in the (R)AN, to perform AMF selection.

(3) Step 3: The (R)AN transmits a Registration Request message to the new AMF. The Registration Request message corresponds to N2 message.

The Registration Request message may include whole information and/or a part of information included in the Registration Request message received from the UE which is described in step 1.

The Registration Request message may include N2 parameters. When NG-RAN is used, the N2 parameters include the selected PLMN ID (or PLMN ID and NID), location information and cell identity related to the cell in which the UE is camping, UE context request which indicates that a UE context including security information needs to be setup at the NG-RAN. When NG-RAN is used, the N2 parameters shall also include the establishment cause.

If the Registration type indicated by the UE is Periodic Registration Update, then steps 4 to 19 may be omitted.

(4) Step 4: If the UE's 5G-GUTI was included in the Registration Request message and the serving AMF has changed since last registration procedure, the new AMF may invoke the Namf_Communication UEContextTransfer service operation on the old AMF including the complete registration request non-access stratum (NAS) message to request the UE's SUPI and UE context.

(5) Step 5: The Old AMF may respond to the new AMF for the Namf_Communication_UEContextTransfer invocation by including the UE's SUPI and UE context.

(6) Step 6: If the SUCI is not provided by the UE nor retrieved from the old AMF, the identity request procedure may be initiated by the new AMF sending the Identity Request message to the UE requesting the SUCI.

(7) Step 7: The UE may respond with an Identity Response message including the SUCI. The UE derives the SUCI by using the provisioned public key of the home PLMN (HPLMN).

(8) Step 8: The new AMF may decide to initiate UE authentication by invoking an AUSF. In that case, the new AMF selects an AUSF based on SUPI or SUCI.

(9) Step 9: Authentication/security may be established by the UE, new AMF, AUSF and/or UDM.

(10) Step 10: If the AMF has changed, the new AMF may notify the old AMF that the registration of the UE in the new AMF is completed by invoking the Namf_Communication_RegistrationCompleteNotify service operation. If the authentication/security procedure fails, then the registration shall be rejected, and the new AMF may invoke the Namf_Communication_RegistrationCompleteNotify service operation with a reject indication reason code towards the old AMF. The old AMF may continue as if the UE context transfer service operation was never received.

(11) Step 11: If the PEI was not provided by the UE nor retrieved from the old AMF, the Identity Request procedure may be initiated by the new AMF sending an Identity Request message to the UE to retrieve the PEI. The PEI shall be transferred encrypted unless the UE performs emergency registration and cannot be authenticated.

(12) Step 12: Optionally, the new AMF may initiate ME identity check by invoking the N5g-eir_EquipmentIdentityCheck_Get service operation.

Now, procedures of FIG. 7, which follow the procedures of FIG. 6, are described.

(13) Step 13: If step 14 below is to be performed, the new AMF, based on the SUPI, may select a UDM, then UDM may select a UDR instance.

(14) Step 14: The new AMF may register with the UDM.

(15) Step 15: The new AMF may select a PCF.

(16) Step 16: The new AMF may optionally perform an AM Policy Association Establishment/Modification.

(17) Step 17: The new AMF may transmit Update/Release SM Context message (e.g., Nsmf_PDUSession_UpdateSMContext and/or Nsmf_PDUSession_ReleaseSMContext) to the SMF.

(18) Step 18: If the new AMF and the old AMF are in the same PLMN, the new AMF may send a UE Context Modification Request to the N3IWF/TNGF/W-AGF.

(19) Step 19: The N3IWF/TNGF/W-AGF may send a UE Context Modification Response to the new AMF.

(20) Step 20: After the new AMF receives the response message from the N3IWF/TNGF/W-AGF in step 19, the new AMF may register with the UDM.

(21) Step 21: The new AMF transmits a Registration Accept message to the UE.

The new AMF sends a Registration Accept message to the UE indicating that the Registration Request has been accepted. 5G-GUTI is included if the new AMF allocates a new 5G-GUTI. If the UE is already in RM-REGISTERED state via another access in the same PLMN, the UE shall use the 5G-GUTI received in the Registration Accept message for both registrations. If no 5G-GUTI is included in the Registration Accept message, then the UE uses the 5G-GUTI assigned for the existing registration also for the new registration. If the new AMF allocates a new registration area, it shall send the registration area to the UE via Registration Accept message. If there is no registration area included in the Registration Accept message, the UE shall consider the old registration area as valid. Mobility Restrictions is included in case mobility restrictions applies for the UE and registration type is not emergency registration. The new AMF indicates the established PDU sessions to the UE in the PDU Session status. The UE removes locally any internal resources related to PDU sessions that are not marked as established in the received PDU Session status. When the UE is connected to the two AMFs belonging to different PLMN via 3GPP access and non-3GPP access then the UE removes locally any internal resources related to the PDU session of the current PLMN that are not marked as established in received PDU Session status. If the PDU Session status information was in the Registration Request message, the new AMF shall indicate the PDU Session status to the UE.

The Allowed NSSAI provided in the Registration Accept message is valid in the registration area and it applies for all the PLMNs which have their tracking areas included in the registration area. The Mapping Of Allowed NSSAI is the mapping of each S-NSSAI of the Allowed NSSAI to the HPLMN S-NSSAIs. The Mapping Of Configured NSSAI is the mapping of each S-NSSAI of the Configured NSSAI for the serving PLMN to the HPLMN S-NSSAIs.

Furthermore, optionally the new AMF performs a UE Policy Association Establishment.

(22) Step 22: The UE may send a Registration Complete message to the new AMF when it has successfully updated itself.

The UE may send a Registration Complete message to the new AMF to acknowledge if a new 5G-GUTI was assigned.

(23) Step 23: For registration over 3GPP Access, if the new AMF does not release the signaling connection, the new AMF may send the RRC Inactive Assistance Information to the NG-RAN. For registration over non-3GPP Access, if the UE is also in CM-CONNECTED state on 3GPP access, the new AMF may send the RRC Inactive Assistance Information to the NG-RAN.

(24) Step 24: The new AMF may perform information update towards the UDM.

(25) Step 25: The UE may execute Network Slice-Specific Authentication and Authorization procedure.

### < PDU session establishment procedure >

A PDU session establishment procedure is described. Section 4.3.2 of 3GPP TS 23.502 V16.3.0 (2019-12) can be referred.

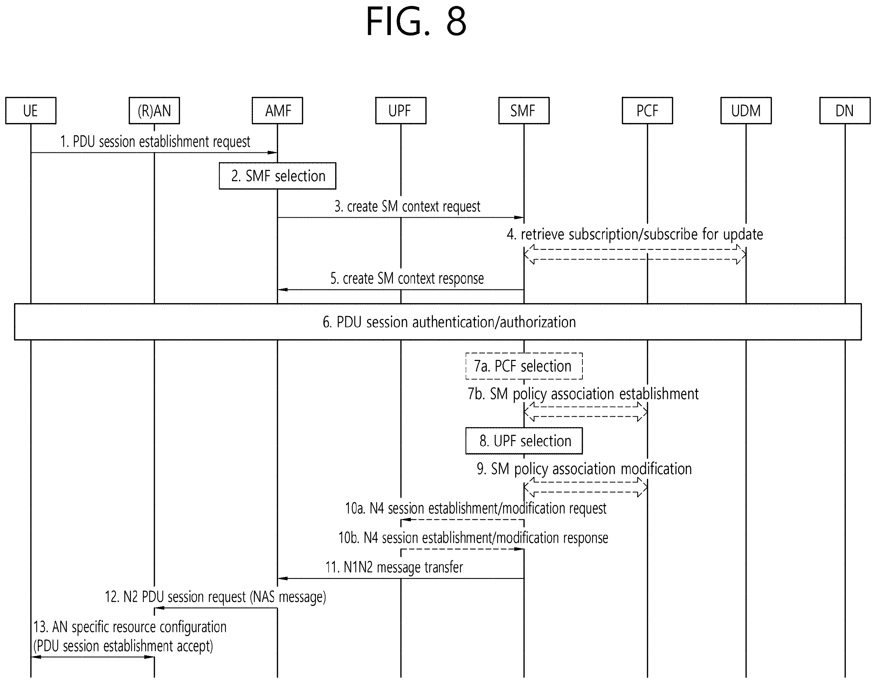

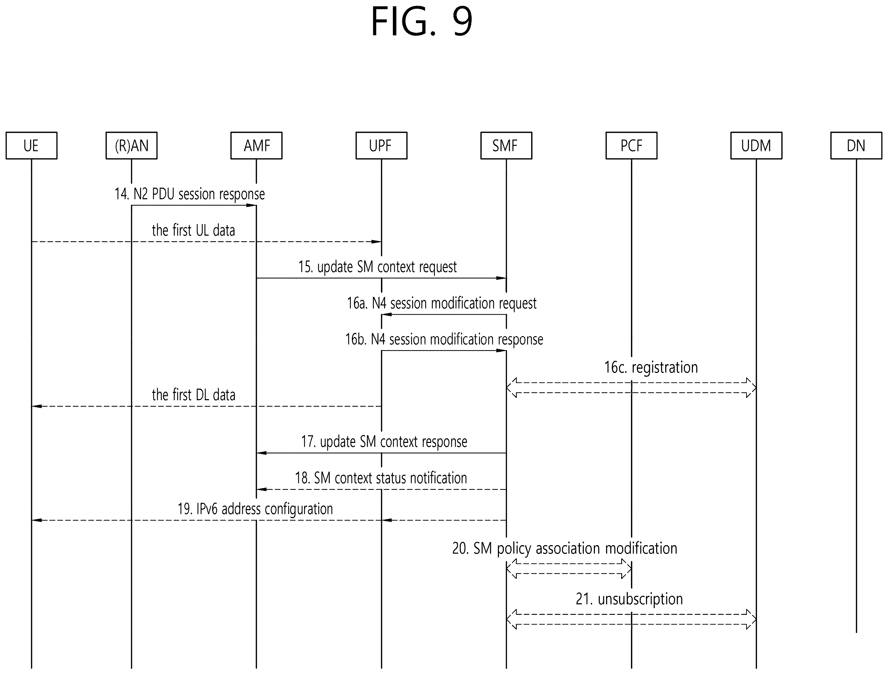

**FIGS. 8** **and** **9** **show an example of a PDU session establishment procedure to which implementations of the present disclosure is applied.**

A PDU session establishment may correspond to:
- a UE initiated PDU session establishment procedure.
- a UE initiated PDU session handover between 3GPP and non-3GPP.
- a UE initiated PDU session handover from EPS to 5GS.
- a network triggered PDU session establishment procedure.

A PDU session may be associated either (a) with a single access type at a given time, i.e., either 3GPP access or non-3GPP access, or (b) simultaneously with multiple access types, i.e., one 3GPP access and one non-3GPP access. A PDU session associated with multiple access types is referred to as multi access PDU (MAPDU) session and it may be requested by access traffic steering, switching, splitting (ATSSS)-capable UEs.

FIGS. 8 and 9 specify the procedures for establishing PDU sessions associated with a single access type at a given time.

The procedure shown in FIGS. 8 and 9 assumes that the UE has already registered on the AMF thus unless the UE is emergency registered the AMF has already retrieved the user subscription data from the UDM.

First, procedures of FIG. 8 are described.
(1) Step 1: In order to establish a new PDU session, the UE generates a new PDU session ID.

The UE initiates the UE requested PDU session establishment procedure by the transmission of a NAS message containing a PDU Session Establishment Request message within the N1 SM container. The PDU Session Establishment Request message includes a PDU session ID, Requested PDU Session Type, a Requested session and service continuity (SSC) mode, 5GSM Capability, protocol configuration options (PCO), SM PDU DN Request Container, UE Integrity Protection Maximum Data Rate, etc.

The Request Type indicates "Initial request" if the PDU session establishment is a request to establish a new PDU session and indicates "Existing PDU Session" if the request refers to an existing PDU session switching between 3GPP access and non-3GPP access or to a PDU session handover from an existing packet data network (PDN) connection in EPC. The Request Type indicates "Emergency Request" if the PDU session establishment is a request to establish a PDU session for emergency services. The Request Type indicates "Existing Emergency PDU Session" if the request refers to an existing PDU session for emergency services switching between 3GPP access and non-3GPP access or to a PDU session handover from an existing PDN connection for emergency services in EPC.

The UE includes the S-NSSAI from the Allowed NSSAI of the current access type. If the Mapping of Allowed NSSAI was provided to the UE, the UE shall provide both the S-NSSAI of the visited PLMN (VPLMN) from the Allowed NSSAI and the corresponding S-NSSAI of the HPLMN from the Mapping Of Allowed NSSAI.

(2) Step 2: The AMF selects an SMF. If the Request Type indicates "Initial request" or the request is due to handover from EPS or from non-3GPP access serving by a different AMF, the AMF stores an association of the S-NSSAI(s), the data network name (DNN), the PDU session ID, the SMF ID as well as the Access Type of the PDU session.

If the Request Type is "initial request" and if the Old PDU session ID indicating the existing PDU session is also contained in the message, the AMF selects an SMF and stores an association of the new PDU Session ID, the S-NSSAI(s), the selected SMF ID as well as Access Type of the PDU Session.

If the Request Type indicates "Existing PDU Session", the AMF selects the SMF based on SMF-ID received from UDM. The AMF updates the Access Type stored for the PDU session.

If the Request Type indicates "Existing PDU Session" referring to an existing PDU session moved between 3GPP access and non-3GPP access, then if the serving PLMN S-NSSAI of the PDU session is present in the Allowed NSSAI of the target access type, the PDU session establishment procedure can be performed in the following cases:
- the SMF ID corresponding to the PDU session ID and the AMF belong to the same PLMN;
- the SMF ID corresponding to the PDU session ID belongs to the HPLMN;

Otherwise the AMF shall reject the PDU session establishment request with an appropriate reject cause.

The AMF shall reject a request coming from an emergency registered UE and the Request Type indicates neither "Emergency Request" nor "Existing Emergency PDU Session".

(3) Step 3: If the AMF does not have an association with an SMF for the PDU session ID provided by the UE (e.g., when Request Type indicates "initial request"), the AMF invokes Create SM Context Request procedure (e.g., Nsmf_PDUSession_CreateSMContext Request). If the AMF already has an association with an SMF for the PDU session ID provided by the UE (e.g., when Request Type indicates "existing PDU Session"), the AMF invokes Update SM Context Request procedure (e.g., Nsmf_PDUSession UpdateSMContext Request).

The AMF sends the S-NSSAI of the serving PLMN from the Allowed NSSAI to the SMF. For roaming scenario in local breakout (LBO), the AMF also sends the corresponding S-NSSAI of the HPLMN from the Mapping Of Allowed NSSAI to the SMF.

The AMF ID is the UE's GUAMI which uniquely identifies the AMF serving the UE. The AMF forwards the PDU session ID together with the N1 SM container containing the PDU Session Establishment Request message received from the UE. The generic public subscription identifier (GPSI) shall be included if available at AMF.

The AMF provides the PEI instead of the SUPI when the UE in limited service state has registered for emergency services without providing a SUPI. In case the UE in limited service state has registered for Emergency services with a SUPI but has not been authenticated, the AMF indicates that the SUPI has not been authenticated. The SMF determines that the UE has not been authenticated when it does not receive a SUPI for the UE or when the AMF indicates that the SUPI has not been authenticated.

The AMF may include a PCF ID in the Nsmf_PDUSession_CreateSMContext Request. This PCF ID identifies the home PCF (H-PCF) in the non-roaming case and the visited PCF (V-PCF) in the LBO roaming case.

(4) Step 4: If session management subscription data for corresponding SUPI, DNN and S-NSSAI of the HPLMN is not available, then SMF may retrieve the session management subscription data from the UDM and subscribes to be notified when this subscription data is modified.

(5) Step 5: The SMF transmits either Create SM Context Response message (e.g., Nsmf_PDUSession_CreateSMContext Response) or Update SM Context Response message (e.g., Nsmf_PDUSession_UpdateSMContext Response) to the AMF, depending on the request received in step 3.

If the SMF received Nsmf_PDUSession_CreateSMContext Request in step 3 and the SMF is able to process the PDU session establishment request, the SMF creates an SM context and responds to the AMF by providing an SM Context ID.

When the SMF decides to not accept to establish a PDU session, the SMF rejects the UE request via NAS SM signaling including a relevant SM rejection cause by responding to the AMF with Nsmf_PDUSession_CreateSMContext Response. The SMF also indicates to the AMF that the PDU session ID is to be considered as released, the SMF proceeds to step 20 below and the PDU session establishment procedure is stopped.

(6) Step 6: Optional secondary authentication/authorization may be performed.

(7a) Step 7a: If dynamic policy and charging control (PCC) is to be used for the PDU session, the SMF may perform PCF selection.

(7b) Step 7b: The SMF may perform an SM Policy Association Establishment procedure to establish an SM Policy association with the PCF and get the default PCC rules for the PDU session.

(8) Step 8: The SMF selects one or more UPFs.

(9) Step 9: The SMF may perform an SMF initiated SM Policy Association Modification procedure to provide information on the policy control request trigger condition(s) that have been met.

(10) Step 10: If Request Type indicates "initial request", the SMF may initiate an N4 Session Establishment procedure with the selected UPF. Otherwise, the SMF may initiate an N4 Session Modification procedure with the selected UPF

In step 10a, the SMF may send an N4 Session Establishment/Modification Request to the UPF and provides packet detection, enforcement and reporting rules to be installed on the UPF for this PDU session. In step 10b, the UPF may acknowledge by sending an N4 Session Establishment/Modification Response.

(11) Step 11: The SMF transmits a N1N2Message Transfer message (e.g., Namf_Communication_N1N2MessageTransfer) to the AMF.

The N1N2Message Transfer message may include N2 SM information. The N2 SM information carries information that the AMF shall forward to the (R)AN which may include:
- The CN Tunnel Info: Core network address(es) of the N3 tunnel corresponding to the PDU session;
- One or multiple quality of service (QoS) profiles and the corresponding QoS flow IDs (QFIs);
- The PDU session ID: indicate to the UE the association between (R)AN resources and a PDU session for the UE.
- S-NSSAI with the value for the serving PLMN (i.e., the HPLMN S-NSSAI or, in LBO roaming case, the VPLMN S-NSSAI).
- User Plane Security Enforcement information determined by the SMF.
- If the User Plane Security Enforcement information indicates that integrity protection is "Preferred" or "Required", the SMF also includes the UE Integrity Protection Maximum Data Rate as received in the PDU Session Establishment Request message.
- Redundancy sequence number (RSN) parameter

The N1N2Message Transfer message may include N1 SM container. The N1 SM container contains the PDU Session Establishment Accept message that the AMF shall provide to the UE. The PDU Session Establishment Accept message includes S-NSSAI from the Allowed NSSAI. For LBO roaming scenario, the PDU Session Establishment Accept message includes the S-NSSAI from the Allowed NSSAI for the VPLMN and also it includes the corresponding S-NSSAI of the HPLMN from the Mapping Of Allowed NSSAI that SMF received in step 3.

Multiple QoS Rules, QoS flow level, QoS parameters if needed for the QoS Flow(s) associated with those QoS rule(s) and QoS Profiles may be included in the PDU Session Establishment Accept message within the N1 SM container and in the N2 SM information.

If the PDU session establishment failed anywhere between step 5 and step 11, then the N1N2Message Transfer message shall include the N1 SM container with a PDU Session Establishment Reject message and shall not include any N2 SM information. The (R)AN sends the NAS message containing the PDU Session Establishment Reject message to the UE. In this case, steps 12-17 are skipped.

(12) Step 12: The AMF sends the NAS message containing PDU Session ID and PDU Session Establishment Accept message targeted to the UE and the N2 SM information received from the SMF within the N2 PDU Session Request message to the (R)AN.

(13) Step 13: The (R)AN may issue AN specific signaling exchange with the UE that is related with the information received from SMF. For example, in case of a NG-RAN, an RRC connection reconfiguration may take place with the UE establishing the necessary NG-RAN resources related to the QoS rules for the PDU session request received in step 12.

The (R)AN forwards the NAS message (PDU Session ID, N1 SM container (PDU Session Establishment Accept message)) provided in step 12 to the UE. The (R)AN shall only provide the NAS message to the UE if the AN specific signaling exchange with the UE includes the (R)AN resource additions associated to the received N2 command.

If the N2 SM information is not included in the step 11, then the following steps 14 to 16b and step 17 are omitted.

Now, procedures of FIG. 9, which follow the procedures of FIG. 8, are described.

(14) Step 14: The (R)AN transmits a N2 PDU Session Response message to the AMF. The N2 PDU Session Response message may include PDU session ID, Cause, N2 SM information (PDU Session ID, AN Tunnel Info, List of accepted/rejected QFI(s), User Plane Enforcement Policy Notification)), etc.

(15) Step 15: The AMF transmits an Update SM Context Request message (e.g., Nsmf_PDUSession_UpdateSMContext Request) to the SMF. The AMF forwards the N2 SM information received from (R)AN to the SMF.

(16a) Step S16a: The SMF initiates an N4 Session Modification procedure with the UPF. The SMF provides AN Tunnel Info to the UPF as well as the corresponding forwarding rules.

(16b) Step S16b: The UPF provides an N4 Session Modification Response to the SMF.

After this step, the UPF may deliver any DL packets to the UE that may have been buffered for this PDU session.

(16c) Step 16c: If the SMF has not yet registered for this PDU session, then the SMF may register with the UDM for a given PDU Session.

(17) Step 17: The SMF transmits an Update SM Context Response message (e.g., Nsmf_PDUSession_UpdateSMContext Response) to the AMF.

After this step, the AMF forwards relevant events subscribed by the SMF.

(18) Step 18: If during the procedure, any time after step 5, the PDU session establishment is not successful, the SMF may inform the AMF by invoking Nsmf_PDUSession_SMContextStatusNotify (Release). The SMF may also release any N4 session(s) created, any PDU session address if allocated (e.g., IP address) and release the association with PCF, if any. In this case, step 19 is skipped.

(19) Step 19: In the case of PDU Session Type IPv6 or IPv4v6, the SMF may generate an IPv6 Router Advertisement and send it to the UE.

(20) Step 20: The SMF may perform SMF initiated SM Policy Association Modification.

(21) Step 21: If the PDU Session establishment failed after step 4, the SMF may unsubscribe to the modifications of session management subscription data, if the SMF is no more handling a PDU session of the UE.

The multiple embodiments described herein may be combined and implemented.

Regarding energy efficiency, if the energy consumption rate (or energy consumption) exceeds the maximum energy consumption rate (or maximum energy consumption) or the total energy unit exceeds the energy credit limit, the service may no longer be provided.

The total energy unit may be the total energy consumption/usage (e.g., calculated in watts, joules, credits, etc.) during a billing period (or billing unit period).

The energy consumption rate/consumption in this specification may be calculated based on the unit/level to which the energy efficiency-related policy is defined/applied. For example, if the unit/level to which the energy efficiency-related policy is applied is a PDU session, the energy consumption rate/consumption may refer to the energy consumption rate/consumption used to use/provide a service related to a specific PDU session.

A specific method for restricting such services is needed.

A service provision method that considers energy efficiency may be proposed.

The method proposed in this specification may be composed of one or more combinations of the operations/configurations/steps described herein.

In this specification, the terms UE (User Equipment) and terminal are used interchangeably.

In this specification, the terms Subscriber and User are used interchangeably.

In this specification, the terms AF (Application Function) and AS (Application Server) are used interchangeably.

In this specification, deactivating the user plane of a PDU session is interchangeably described as deactivating the user plane connection of a PDU session or deactivating the PDU session.

In this specification, the terms service and application are interpreted as being the same unless otherwise specified.

In this specification, limiting services related to energy efficiency may be interpreted as one of the following:
- Applying policies related to energy efficiency
- Performing gating related to energy efficiency
- Controlling credits related to energy efficiency
- Performing service blocking related to energy efficiency
- Controlling/limiting resources related to energy efficiency

This specification primarily describes the proposed content. Operations and procedures related to the 5G system, PDU sessions, URSP, and interactions between AF and the core network (etc.) may be primarily referenced in TS 23.501 v18.2.1, TS 23.502 v18.2.0, and TS 23.503 v18.2.0.

### I. Energy Efficiency-Related Policy

To provide energy-efficient services, energy efficiency policies may be defined and applied at various units/levels.

Energy efficiency policies may include one or more of the following information/values:
- Maximum Energy Consumption Rate (MECR)
- (Maximum) Energy Credit Limit ((M)ECL)

Based on the energy efficiency policy, services may be restricted/gated if the allowed energy consumption rate/consumption for the various units/levels or combinations thereof to which the policy applies is exceeded or is about to be exceeded.

The MECR and/or (M)ECL may be interpreted as information/values used to determine whether the allowed energy consumption rate/consumption is exceeded and may be defined by various names.

Exceeding or about to exceed the permitted energy consumption rate/amount described above may be interpreted to mean one of the following:
- A threshold has been exceeded or is about to be exceeded, requiring service restriction/gating related to energy consumption/efficiency.
- Energy-related credits have been exhausted or are about to be exhausted.
- An energy-related policy must be applied.
- Energy usage has exceeded or is about to exceed a certain threshold.
- The permitted/allowed energy usage has been exceeded or is about to be exceeded.
- The permitted amount of energy has been exhausted or is about to be exhausted.

The term "allowed/permitted" as described above may also be interpreted as "allocated," "subscribed," or "provided." This applies throughout this specification.

In this specification, "exceeding" may only refer to a greater value, or it may also refer to a value that is equal.

Energy efficiency policies may include actions on how to limit or gate services. For example, an energy efficiency policy may include one or more of the following actions:
- Providing a lower level of QoS (e.g., increasing latency, reducing throughput/transfer rate, etc.)
- Deactivating the user plane (or user plane connection) of a PDU session
- releasing the PDU session
- Changing the slice or slice instance of a PDU session
- Changing the access type/RAT type of a PDU session

Some or all of the above actions may be interpreted as limiting or removing resources for providing services.

The MECR and/or (M)ECL included in the energy efficiency policy may have multiple values. For each of these multiple values, different service restriction/gating actions may be applied when the value is exceeded or is about to be exceeded.

The units/levels at which energy efficiency policies are defined/applied may be as follows:
- Subscriber: This may be interpreted as all services provided to subscribers.
- UE: This may be interpreted as all services provided to UEs.
- a group of subscribers: This may be interpreted as all services provided to all subscribers belonging to a group.
- UE group (a group of UEs): This may be interpreted as all services provided to all UEs belonging to a group.
- PDU session: This may be interpreted as all services provided via PDU sessions.
- Slice, slice instance, NSSAI, or S-NSSAI: This may be interpreted as all services provided via slice, slice instance, NSSAI, or S-NSSAI.
- Service
- Service flow
- ASP or service provider: This may be interpreted as a service provided by an ASP or service provider.
- AF (Application Function): This may be interpreted as a service provided/managed by an AF.
- Application
- 5QI (5G QoS Identifier): This may be interpreted as a service provided via 5QI.
- Resource Type: This may be interpreted as a service provided by one or more of the following resource types: Non-GBR, GBR, or Delay-Critical GBR.
- DNN: This may be interpreted as a service provided via DNN.
- Access Type: This may be interpreted as a service provided via a specific access type (e.g., 3GPP access, Non-3GPP access).
- RAT Type: This may be interpreted as a service provided via a specific RAT type (e.g., NR, E-UTRA, etc.).
- Core Network Type: This may be interpreted as a service provided via a specific CN type (e.g., 5GCN, EPC).

The unit/level of energy efficiency-related policies may be configured as a combination of the aforementioned contents (e.g., DNN and slice).

Energy efficiency-related policies may only be defined/applied to services without QoS criteria, best-effort services, or non-GBR services. In contrast, the definition and application of energy efficiency policies are not limited to the aforementioned services.

Energy efficiency policies may be part of subscription policies. Energy efficiency policies may be stored in the UDM and/or UDR.

Energy efficiency policies may be referred to by various names. For example, energy efficiency policies may be referred to as energy consumption policies, green service policies, energy restriction policies, or energy consumption limit policies.

Some or all of the information that constitutes energy efficiency policies may be provided by the AF.

In relation to the interaction between the AF and the core network, various procedures defined in section 4.15 (Network Exposure) of TS 23.502 v18.2.0 may be applied. However, new procedures may be defined, and these procedures are not limited thereto. These procedures may be applied throughout this specification.

### II. Method for deactivation the user plane (or user plane connection) of a PDU session to provide energy-efficient services

For the actions/procedures for deactivating (or activating) the user plane of a PDU session, Section 5.6.8 (Selective activation and deactivation of UP connection of existing PDU Session) of TS 23.501 v18.2.1, Section 4.3.7 (CN-initiated selective deactivation of UP connection of an existing PDU Session) and Section 4.2.3 (Service Request procedures) of TS 23.502 v18.2.0 may be referenced.

### II-1. when the allowed energy consumption rate/consumption is exceeded or about to exceed

If the allowed energy consumption rate/consumption is exceeded or about to exceed, service provision may be restricted/gated.

For example, if the energy consumption rate exceeds the MECR, service provision may be restricted/gated.

For example, when the total 'energy units' exceed the (M)ECL, service provisioning may be restricted/gated.

The SMF may recognize/determine/decide that the allowed energy consumption rate/consumption has been exceeded or is about to be exceeded. In this case, the SMF may decide to deactivate the user plane of the PDU session.

The decision and action related to restricting/gating service provisioning may be based on various information, such as energy efficiency-related policies described in Section I, operator policy, local policy/configuration, subscriber information, service requirements/requests/instructions provided by the AF, and policy information provided by the PCF.

If the SMF decides to deactivate the user plane of a PDU session, one or more of the actions described below may be performed.

### (1) First Embodiment

1) The SMF may provide/notify the AF of at least one of the following information:
   - Exceeded or about to exceed the allowed energy consumption rate/consumption
   - Attempt to release resources
   - Attempt to deactivate the user plane of a PDU session
   - Attempt to discontinue service provision
   - Service provision is unavailable
   - Attempt to apply an energy efficiency policy
   - Energy consumption rate
   - Energy credit remaining
   - Energy credit exhaustion
   - Energy resource shortage, etc.

The above information may be explicit, implicit, combined, or implicit.

The above information may be provided or informed in a form that enables recognition or inference of which service (or application) it pertains to (it may also express whether it pertains to all services or applications).

The above information may be provided/notified to the AF based on a request sent by the AF to the CN.

Based on the AF's subscription to the CN, the above information may be provided/notified to the AF.

At least one of the following '2-1', '2-2', and '2-3', may then be performed.

2-1) After the AF receives/receives information from the SMF (core network), the AF may provide the UE with the provided/notified information (e.g., service unavailability due to energy efficiency policies) via an application layer message/signaling.

The AF may provide the provided/notified information to the UE as is. Alternatively, the AF may provide the provided/notified information to the UE in a modified or combined form.

After the AF provides the information to the UE (or in parallel), the AF may send the following information to the core network/SMF:
- Information indicating that the service may be discontinued, and/or
- Information indicating that resources may be released/provisioned, and/or
- Information indicating that the user plane of the PDU session may be deactivated.

The above information may be explicit, implicit, combined, or implicit.

Based on the information sent by the AF to the core network/SMF, the SMF may deactivate the user plane of the PDU session. For example, the information (message) sent by the AF to the core network/SMF may be intended to instruct the SMF to deactivate the user plane of the PDU session.

2-2) The SMF may start (run) a timer.

When the timer expires, the SMF may deactivate the user plane of the PDU session.

For example, after the SMF has waited a certain amount of time from the time point 1) is performed, the SMF may deactivate the user plane of the PDU session.

The timer (waiting for the aforementioned period of time) may be used to wait for the start/end of the interaction between the AF and the UE described in 2-1).

The timer (waiting for the aforementioned period of time) may be used to wait for the termination of the application session between the AF and the UE based on the interaction between the AF and the UE described in 2-1).

The timer (waiting for the aforementioned period of time) may be used to wait for user traffic based on the interaction between the AF and the UE described in 2-1) to no longer be transmitted.

The timer value (information) may be set in the SMF. Alternatively, the timer value (information) may be included as part of an energy efficiency policy. Alternatively, the timer value (information) may be included in subscriber information. The above energy efficiency-related policies may be stored in the UDM and/or UDR. The subscriber information may be stored in the UDM and/or UDR.

The timer value (information) may be provided to the SMF from another NF (e.g., PCF, etc.) or AF.

2-3) The SMF may deactivate the user plane of a PDU session based on a User Plane Inactivity Report from the UPF. The operation/procedure for this may be referred to Section 4.3.7 (CN-initiated selective deactivation of an existing PDU session) and Section 4.4.2.2 (N4 Session Level Reporting Procedure) of TS 23.502 v18.2.0.

The User Plane Inactivity Report may be provided to the SMF from the UPF based on the detection of PDU session inactivity for a specified period.

The SMF may provide the UPF with an inactivity timer value for a PDU session. The UPF may detect inactivity of a PDU session for a specific period corresponding to the inactivity timer value. Based on the detection, the UPF may send a user plane inactivity report to the SMF.

The inactivity timer value may be determined/set based on the interaction between the AF and the UE described in 2-1). The inactivity timer value may be determined/set by the SMF based on the interaction between the AF and the UE. The inactivity timer value may be provided to the SMF from the AF. The inactivity timer value may be provided to the SMF from another NF (e.g., PCF, UDR, UDM, etc.).

If, after the SMF performs step 1), no more user traffic occurs on the PDU session (or it determines that no more user traffic occurs), the SMF may deactivate the user plane of the PDU session.

In the first embodiment, there may be one or more AFs associated with the PDU session (or associated with a service belonging to the PDU session). In this case, the aforementioned operation may be applied to one or more AFs.

Alternatively, the URSP rule may be configured to ensure that only one AF is associated with the PDU session (or associated with a service belonging to the PDU session). For example, based on the URSP rule, the PDU session may be established with only one associated AF. The URSP rule may be configured to ensure that only one AF is associated with the PDU session (or associated with a service belonging to the PDU session).

The SMF may perform gating control with the UPF. Through gating control, the SMF may control whether to transmit all services/applications/service data flows/traffic flows.

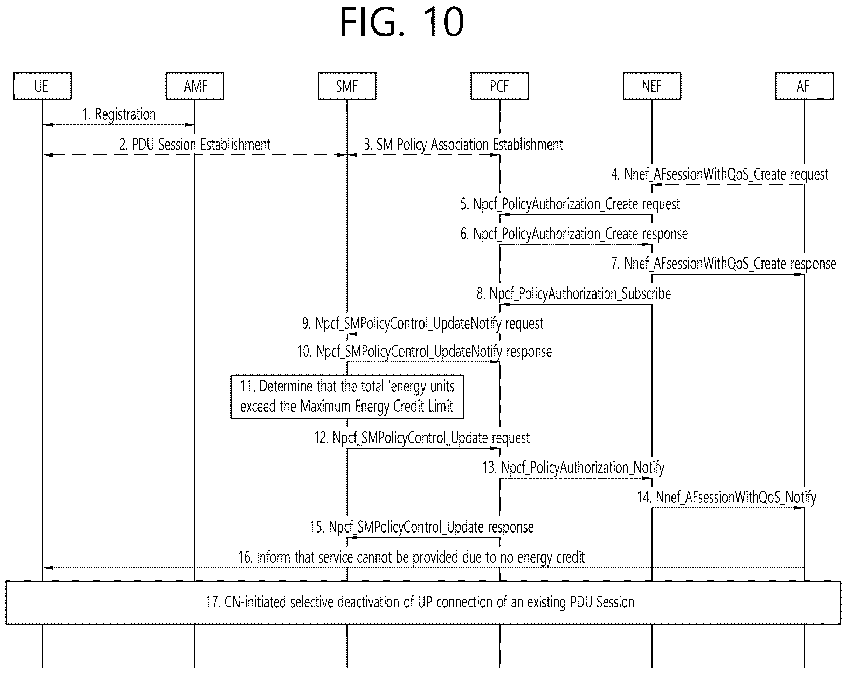

**FIG. 10** **shows a flowchart according to the first embodiment of the present specification.**

Step 1. The UE may perform a registration procedure.

Regarding the registration procedure, refer to Section 4.2.2.2 of TS 23.502 v18.2.0 (Registration procedures) or the information described above in FIGS. 6 and 7.

Step 2 - Step 3. The UE may establish a PDU session. The SMF may establish an SM Policy Association with the PCF.

Refer to Section 4.3.2.2 of TS 23.502 v18.2.0 (UE Requested PDU Session Establishment) or the information described above in FIGS. 8-9.

Step 4. The AF may send a request to the NEF.

The AF may include information requesting the provision/report of energy-related information in the request. The AF may include the information described in Section I above in the request.

The request may include information requesting the provision/notification of energy-related information for a specific PDU session. The UE address (e.g., IP address) provided by the AF may be identification information for the specific PDU session of the UE.

Steps 4-8 and 13-14 may be based on Section 4.15.6.6 (Setting up an AF session with required QoS procedure) of TS 23.502 v18.2.0.

Step 5 - Step 6. The NEF may send an Npcf PolicyAuthorization_Create request to the PCF based on the request from the AF (including the information contained in the request). Based on the Npcf_Policy_Create request, the PCF may send an Npcf_PolicyAuthorization_Create response to the NEF.

Step 7. The NEF may send a response to the Nnef_AFsessionWithQoS_Create request to the AF.

Step 8. The NEF may request (or subscribe to) the PCF to provide/notify energy-related information.

Step 9. The PCF may send the Npcf_SMPolicyControl_UpdateNotify request to the SMF.

Through the Npcf_SMPolicyControl_UpdateNotify request, the PCF may update policy information with the SMF. Alternatively, through the Npcf_SMPolicyControl_UpdateNotify request, the PCF may modify the SM Policy Association with the SMF.

The Npcf_SMPolicyControl_UpdateNotify request may include a request to perform the following actions:
- When the SMF recognizes/judges/determines that it has exceeded or is about to exceed the permitted energy consumption rate/volume, the action of the SMF informing the PCF of energy-related information

A new Policy Control Request Trigger (PCRT) may be defined for the above request and included in the Npcf_SMPolicyControl_UpdateNotify request.

Step 10. The SMF may send a response to the PCF.

The actions in Steps 9 and 10 may be based on Section 4.16.5.2 (PCF Initiated SM Policy Association Modification) of TS 23.502 v18.2.0.

Step 11. The SMF may recognize/determine/determine that the energy consumption rate/consumption associated with the specific PDU session has exceeded (or is about to exceed) the allowed energy consumption rate/consumption.

Step 12. The SMF may provide/notify the PCF with energy-related information. The energy-related information may include information provided/notified by the SMF to the AF as described in Embodiment 1.

Step 13. The PCF may provide/notify the NEF with the received energy-related information.

Step 14. The NEF may provide/notify the AF with the received energy-related information.

Step 15. The PCF may respond to the SMF.

Step 16. The AF may provide the UE with energy-related information provided/notified from the SMF/core network (e.g., service unavailability due to energy efficiency policies) either as is or in a modified/combined form using application layer messages/signaling.

Step 17. The SMF may deactivate the user plane of the PDU session. This may be based on Section 4.3.7 (CN-initiated Selective Deactivation of an UP Connection of an Existing PDU Session) of TS 23.502 v18.2.0.

The SMF may deactivate the user plane of the PDU session by applying an energy efficiency policy.

The SMF's decision to apply the energy efficiency policy (deactivate the user plane of the PDU session) may be based on the energy efficiency policy described in Section I above, operator policy, local policy/configuration, subscriber information, service requirements/requests/instructions provided by the AF, or policy information provided by the PCF (which may be provided in step 9 or step 15).

The steps described above may be performed concurrently or in parallel with other steps. For example, steps 14 and 15 may be performed concurrently or in parallel.

In the procedure described above, the AF may interact directly with the PCF without going through the NEF.

In the above procedure, some response messages may be omitted for convenience (e.g., response messages to Notify).

### (2) Second Embodiment

The first embodiment may be performed concurrently with the second embodiment.
1) The SMF may deactivate the user plane of the PDU session.
2) The SMF may provide/notify the UE of at least one of the following information using a Session Management (SM) NAS message (e.g., a PDU Session Modification Command, etc.):

- The energy consumption rate/consumption has exceeded or is about to exceed the allowed energy consumption rate/consumption.
- Resources are about to be released/released.
- The user plane of the PDU session is about to be deactivated/disabled.
- Service provision is about to be stopped/suspended.
- Service provision is unavailable.
- Instructs/requests not to perform a service request.
- Instructs/requests to stop traffic transmission.
- Instructs/requests not to connect the user plane.

The above-described information may be interpreted as information related to the reason for deactivating the PDU session.

Step 2) may be performed before or in parallel with Step 1).

After a PDU session is deactivated, the UE may request activation of the user plane of the PDU session. If the network/SMF still cannot provide service to the UE, the UE's activation request may be rejected.

To prevent the UE from repeatedly requesting user plane activation, the SMF may transmit an indication (or information) to the AMF instructing it to reject the UE's activation request for a specific PDU session/slice/DNN (or slice and DNN).

Based on the indication (or information) received by the AMF, the AMF may reject the UE's request for user plane activation of PDU session. In this case, the AMF may reject the UE's request without signaling to the SMF.

The SMF may transmit timing information (e.g., a timer, start/end timer, etc.) to the AMF, which allows the AMF to reject the UE's request for a specific period of time. In this case, the AMF may reject the UE's activation request for that period without further signaling to the SMF.

At this time, the AMF may send a Service Accept message to the UE. The "PDU session reactivation result IE" of the Service Accept message may include information indicating that the UE's request has been rejected.

Alternatively, the AMF may send a Service Reject message to the UE. The Service Reject message may include information indicating that the UE's request has been rejected.

The AMF may notify the UE that the UE's request has been rejected through the cause included in the Service Reject message. The cause may be a conventional cause (e.g., "Insufficient resources for a specific slice and DNN," "Insufficient resources for a specific slice," "Insufficient user-plane resources for the PDU session," etc.) or a newly defined cause (e.g., "Insufficient energy").

Based on whether the energy consumption rate/consumption due to a service (or PDU session) associated with (or belonging to) a PDU session has exceeded (or is about to exceed) the permitted energy consumption rate/consumption, the user plane of the PDU session may be deactivated, as described above.

Based on the service (or PDU session) associated with the PDU session being subject to an energy efficiency policy, the user plane of the PDU session may be deactivated, as described above.

Interaction between the SMF and the AF may be performed through other NF(s) (e.g., PCF, NEF, etc.).

The PCF may perform some or all of the operations performed by the SMF described above. For example, the PCF may recognize/determine/determine that the energy consumption rate/consumption has exceeded (or is about to exceed) the permitted energy consumption rate/consumption. In this case, the PCF may instruct the SMF to deactivate the user plane of the PDU session.

The method by which the SMF or PCF recognizes/determines that the energy consumption rate/consumption has exceeded (or is about to exceed) the permitted energy consumption rate/consumption may be referred to in Section IV, described below.

**II-2. When energy credits become available again or it is determined/predicted that the energy consumption rate will not exceed the MECR even if the service is resumed (e.g., UE moves to good network coverage), the service is resumed/provided.**

After the actions described in II-1 are performed, if energy credits become available again or the energy consumption rate is determined/predicted not to exceed the MECR even if service is resumed, service may be resumed/provisioned.

Here, the service may be associated with a deactivated PDU session.

### (1) Third Embodiment

When energy credits become available again, the AF may decide to activate the PDU session and resume service.

The AF may determine/predict that the energy consumption rate will not exceed the MECR even if the service is resumed (when the inactive PDU session is reactivated). Accordingly, the AF may decide to activate the PDU session and resume the service.

In this case, the AF may notify the UE that the service is available (or that the service can be resumed, or that a service request is available) through application layer messages/signaling.

The user plane of the PDU session may be activated.

The AF may receive various energy-related information, UE-related information, etc. from one or more NFs. Based on the received information, the AF may make the decision to resume the service as described above.

The NFs included in the one or more NFs may be newly defined NFs. Alternatively, the NFs included in the one or more NFs may be conventional NFs (e.g., UDR, NEF, NWDAF, PCF, SMF, UDM, AMF, etc.).

There may be more than one AF associated with a PDU session (or a service belonging to a PDU session). In this case, the aforementioned operation may be applied to more than one AF.

Alternatively, the URSP rule may be configured to ensure that there is only one AF associated with a PDU session (or a service belonging to a PDU session). For example, the URSP rule may be configured to ensure that there is only one AF associated with a PDU session (or a service belonging to a PDU session).

### (2) Fourth Embodiment

When energy credits become available again, the SMF may decide to activate the PDU session to resume service.

The SMF may determine/predict that the energy consumption rate will not exceed the MECR even if the service is resumed (when a deactivated PDU session is reactivated). Accordingly, the SMF may decide to activate the PDU session to resume service.

In this case, the SMF may notify the UE that service provision is possible (and/or that service can be resumed and/or that a service request is possible) via an SM NAS message (e.g., a PDU Session Modification Command, etc.).

The UE may then send a service request to the network, if necessary. This can activate the user plane of the PDU session.

The PCF may perform some or all of the actions performed by the SMF described above. For example, the PCF may decide to activate the PDU session to resume service. Alternatively, for example, the PCF may determine/predict that the energy consumption rate will not exceed the MECR when an inactive PDU session is reactivated. In this case, the PCF may notify the SMF of this.

If, as described in Section II-1, the SMF instructs the AMF to reject a PDU session activation request for a specific PDU session/DNN/slice/DNN&slice, the SMF may instruct the AMF to allow a PDU session activation request for a specific PDU session/DNN/slice/DNN&slice.

The AF or SMF's method for making the aforementioned judgment/prediction (that the MECR will not be exceeded) and/or service resumption decision (or service provision is possible) may be referred to in Section V below.

### III. method for performing PDU session release to provide energy-efficient services

For operations/procedures related to releasing and establishing PDU sessions, please refer to Sections 4.3.4 (PDU Session Release) and 4.3.2 (PDU Session Establishment) of TS 23.502 v18.2.0.

### III-1. When the energy consumption rate/volume exceeds (or is about to exceed) the allowed energy consumption rate/volume (e.g., when the energy consumption rate has exceeded the MECR or when the total 'energy units' exceed the (M)ECL), service provision is restricted/gated.

The SMF may recognize/determine/decide that the energy consumption rate/volume has exceeded (or is about to exceed) the allowed energy consumption rate/volume. In this case, the SMF may decide to release the PDU session. For example, the PDU session may be released to restrict/gate service provision. The SMF may send a PDU Session Release message to the UE.

Decisions and actions for limiting/gating service provision may be based on various information, such as the energy efficiency-related policy described in I, operator policy, local policy/configuration, subscriber information, service requirements/requests/instructions provided by the AF, and policy information provided by the PCF.

### (1) Fifth Embodiment

1) Based on the PDU session release decision described above, the SMF may release the PDU session. At this time, the SMF may provide the UE with one or more of the following information or causes:
   - Information indicating not to establish a related PDU session (here, the related PDU session may be interpreted as a PDU session for a service that can be provided through the released PDU session. This may be applied throughout this specification)
   - The reason for releasing the PDU session (this may refer to the information provided by the SMF to the UE in the second embodiment of II-1 described above)
2) The PCF may recognize/judge/determine that the energy consumption rate/consumption has exceeded (or is about to exceed) the allowed energy consumption rate/consumption. In this case, the PCF may configure/update URSP rules to prevent the UE from establishing PDU sessions for all services/applications for which service provisioning must be restricted/gated. The PCF may then provide the updated URSP rules to the UE.

The following methods may be used to configure/update the aforementioned URSP rules:
- Include information indicating that the URSP rule/RSD is invalid in the validity criteria of the Route Selection Descriptor (RSD) for all services/applications (or traffic descriptors representing such services) whose service provision should be restricted/gated. Various methods may be used to include/express this information. A new Information Element (IE) may be added to the validity criteria to indicate invalidity (e.g., "OFF," "no energy credit," or "MECR exceeded"). Alternatively, invalidity may be included/expressed by setting the values of the existing validity criteria, such as Time Window and/or Location Criteria, to specific values.

Step 2) may be performed concurrently with Step 1). Alternatively, Step 2) may be performed before Step 1). Alternatively, only step 1) may be performed, and step 2) may not be performed.

The PCF's operation for recognizing/determining/determining that the energy consumption rate/consumption exceeds (or is about to exceed) the allowed energy consumption rate/consumption may refer to the operation of the SMF described in II-1 above (the operation for recognizing/determining/determining that the energy consumption rate/consumption exceeds (or is about to exceed) the allowed energy consumption rate/consumption).

The SMF may provide relevant information to the PCF. Based on the received information, the PCF may recognize/determine/determine that the energy consumption rate/consumption exceeds (or is about to exceed) the allowed energy consumption rate/consumption. The relevant information may be provided to the PCF by the SMF through another NF. For example, the SMF may transmit relevant information to the SM PCF, and the SM PCF may provide relevant information to the UE Rules/URSP PCF. This content may be applied throughout this specification.

### (2) Sixth Embodiment

According to the fifth embodiment, a URSP rule that prevents the formation of a related PDU session when a PDU session is released may be configured/updated and dynamically provided to the UE.

Conversely, if the URSP rule is configured/provided to the UE, the UE may determine the validity of the URSP rule (or whether a PDU session can be established) based on energy-related information provided by the network.

To this end, the validity criteria of the Route Selection Descriptor (RSD) for all services/applications to which energy efficiency policies should be applied (or for traffic descriptors representing such services/applications) may include an Information Experience (IE) that determines the URSP rule is valid (or invalid) if the energy credit exceeds a threshold.

The threshold may vary for each service/application.

If the UE knows the energy credit value associated with the traffic descriptor (or has received one from the network), the UE may consider it when evaluating the mapping/matching/validity of the URSP rule.

Alternatively, if the UE does not know the energy credit value associated with the traffic descriptor (or has not received one from the network), the UE may ignore the energy credit-related validity criteria (e.g., consider them as nonexistent) and evaluate the mapping/matching/validity of the URSP rule.

The UE may establish a PDU session based on the aforementioned URSP rule (a URSP rule that prevents the UE from establishing a PDU session for a service/application that it has decided to restrict in terms of energy consumption).
1) Upon the SMF's decision to release the PDU session, the SMF may release the PDU session. The SMF may provide the UE with one or more of the following information (or causes):
   - Information indicating not to establish a related PDU session (a PDU session for a service that can be provided through the released PDU session)
   - Reason for releasing the PDU session: This information may be the information provided by the SMF to the UE in the second embodiment of II-1 described above.
   - Energy credit balance: After a PDU session is released, the UE may attempt to establish a PDU session. At this time,the UE may determine that the URSP rule is invalid based on the remaining energy credit balance. The validity of theURSP rule may be based on information provided by the network to the UE, allowing the UE to determine the validityof the URSP rule based on energy-related information. Based on this determination, the UE may decide not toestablish the PDU session.

### (3) Seventh Embodiment

As described above, if the SMF decides to release a PDU session, the following actions may be performed.
1) The SMF may provide/notify the AF of at least one of the following:
   - Information indicating that the energy consumption rate/consumption has exceeded or is about to exceed the permitted energy consumption rate/consumption.
   - Information indicating that a resource is about to be released.
   - Information indicating that a PDU session is about to be released.
   - Information indicating that service provision is about to be discontinued.
   - Information indicating that service provision is unavailable.
   - Information indicating that an energy efficiency policy is about to be applied.
   - Energy consumption rate.
   - Energy credit remaining.
   - Energy credit exhaustion.
   - Energy resource shortage, etc.

The above information may be explicit, implicit, combined, or implicit. The information may be provided/notified in a form that allows the AF to recognize/infer the service or application to which it applies (or may be expressed as applicable to all services or applications).

The SMF may provide/notify the AF of the above information because the AF has requested the information from the core network. Alternatively, the SMF may provide/notify the AF with the above information because the AF has joined the core network.

Steps 2-1) and/or 2-2) may then be performed.

2-1) AF may provide UE with the information provided by SMF/core network in 1) above as application layer messages/signaling, either in its original form or in modified/combined form (e.g., indicating service unavailability due to energy efficiency policies).

After or in parallel with the AF providing the information to the UE, the AF may provide the SMF/core network with at least one of the following information:
- Information indicating that service provision may be discontinued.
- Information indicating that resources may be released/deleted.
- Information indicating that the PDU session may be released.

The above information may be explicit, implicit, combined, or implicit. The information may ultimately enable the SMF to release the PDU session.

The SMF may release the PDU session after receiving the information from the AF.

2-2) The SMF may start a timer. When the timer expires, the SMF may release the PDU session.

For example, the SMF may start a timer after performing step 1), and release the PDU session after waiting for the time corresponding to the timer.

The timer may be used to wait for the start/end of the interaction between the AF and the UE described in step 2-1).

The timer may be used to wait for the termination of the application session between the AF and the UE resulting from the interaction between the AF and the UE described in step 2-1).

The timer may be used to wait for user traffic to no longer be transmitted due to the interaction between the AF and the UE described in step 2-1.

The timer information/value may be set in the SMF.

The timer information/value may be included in the SMF as part of an energy efficiency policy.

The timer information/value may be provided to the SMF by another NF (e.g., PCF, etc.).

The timer information/value may be provided to the SMF by the AF.

In the seventh embodiment, there may be more than one AF associated with a PDU session (or a service belonging to a PDU session). In this case, the above-described operation may be applied to more than one AF.

Alternatively, the URSP rule may be configured such that there is only one AF associated with a PDU session (or a service belonging to a PDU session). For example, the URSP rule may be configured such that there is only one AF associated with a PDU session (or a service belonging to a PDU session).

If the UE subsequently requests the establishment of the PDU session, but the network/SMF is still unable to provide the service to the UE, the network/SMF may reject the request.

Based on the energy consumption rate/consumption due to the service associated with (or belonging to) a PDU session exceeding (or being about to exceed) the allowed energy consumption rate/consumption, the PDU session may be released as described above.

Based on the PDU session being subject to an energy efficiency policy, the PDU session may be released as described above.

Interaction between the SMF and the AF may be performed through other NF(s) (e.g., PCF, NEF, etc.).

The PCF may perform some or all of the operations performed by the SMF as described above. For example, the PCF may recognize/determine/determine that the energy consumption rate/consumption has exceeded (or is about to exceed) the allowed energy consumption rate/consumption. In this case, the PCF may instruct the SMF to release the PDU session.

The method by which the SMF or PCF recognizes/determines that the energy consumption rate/consumption has exceeded (or is about to exceed) the permitted energy consumption rate/consumption may be referred to in Section IV, which is described below.

**III-2. When energy credits become available again or it is determined/predicted that the energy consumption rate will not exceed the MECR even if the service is resumed (e.g., UE moves to good network coverage), the service is resumed/provided.**

After the actions described in III-1 are performed, if energy credits become available again or the energy consumption rate is determined/predicted not to exceed the MECR even if service is resumed, service may be resumed/provisioned.

### (1) Eighth Embodiment

The eighth embodiment may be used in conjunction with the fifth embodiment.

When energy credits become available again, the PCF may decide to activate the PDU session and resume service.

The PCF may determine/predict that the energy consumption rate will not exceed the MECR even when the service is resumed (when the inactive PDU session is reactivated). Accordingly, the PCF may decide to activate the PDU session to resume the service.

The PCF may configure/update URSP rules to enable the UE to establish PDU sessions for all services/applications whose service is being resumed.

The PCF may provide the URSP rules to the UE.

To configure/update the URSP rules, the following methods may be used:
- The validity criteria of the Route Selection Descriptor (RSD) for all services/applications (or traffic descriptors representing them) that must be resumed/provided may include information indicating that the URSP rules/RSDs are valid. Various methods may be used to include/express this information. Validity criteria may be supplemented with a new Information Element (IE) to include/express validity (e.g., "ON," "energy credit available," or "not exceeding MECR"). Alternatively, validity may be expressed/expressed by setting the values of existing validity criteria, such as Time Window and/or Location Criteria, to specific values.

### (2) Ninth Embodiment

The ninth embodiment may be used in conjunction with the sixth embodiment.

A PCF, AF, or AMF may provide the UE with a remaining energy credit amount.

The remaining energy credit amount may be provided/notified in a form that allows for recognition/inference of the service or application to which it corresponds (or can be expressed as applicable to all services or applications) and the URSP rule to which it corresponds (or can be expressed as applicable to all URSP rules).

Based on the remaining energy credit amount, the UE may determine that the URSP rule is valid. Based on the above decision, the UE may decide to establish a PDU session.

The PCF, AF, or AMF may determine/predict whether the MECR will not be exceeded upon service resumption. Based on this, the PCF, AF, or AMF may make a service resumption decision (or a determination that service provision is possible).

The method of the PCF, AF, or AMF for the above-described judgment/prediction (that the MECR will not be exceeded) and/or the service resumption decision (or the determination that service provision is possible) may be referred to in Section V below.

**IV. Method for the NF (Network Function) to recognize/judge/determine that the energy consumption rate/consumption has exceeded (or is about to exceed) the allowed energy consumption rate/consumption.**

Based on information provided by other NF(s), an NF (e.g., SMF, PCF, AF, etc.) may recognize/determine/determine that the energy consumption rate/consumption has exceeded (or is about to exceed) the permitted energy consumption rate/consumption.

The information provided by the other NF(s) may include information that "the permitted energy consumption rate/consumption has exceeded or is about to exceed."

An NF (e.g., SMF, PCF, AF, etc.) may periodically receive/receive notification of energy consumption rates/consumption from the other NF(s) (e.g., by subscribing to a provision/reporting service). This may be applied throughout this specification.

The other NF(s) may be a newly defined NF (e.g., Energy Efficiency NF (EENF), etc.).

The other NF(s) may be a conventional NF (e.g., UDR, NEF, NWDAF, PCF, UDM, SMF, AF, AMF, etc.).

Energy consumption measurement may be performed at various locations, including the UE, NG-RAN, and the core network NF.

A newly defined NF (e.g., Energy Efficiency NF) may collect measurement results (measured energy consumption rate/consumption). Alternatively, a conventional NF (e.g., UDR, NEF, NWDAF, PCF, UDM, AMF, SMF, AF, etc.) may collect measurement results (measured energy consumption rate/consumption). Alternatively, multiple NFs may collect measurement results and report them to the final collecting NF.

Measuring energy consumption rate/consumption may be performed by multiple NFs. The measurement results (measured energy consumption rate/consumption) may be reported to the final collecting NF.

The unit (or level) of measurement (or collection) of energy consumption rate/consumption may correspond to the unit (level) at which the energy efficiency-related policy described in Section I is defined (applied) or may be the unit (level) required to apply the energy efficiency-related policy. These considerations may be applied throughout this specification.

### V. Method for a Network Function (NF) to Recognize/Determine Whether Service Resumption (Provision) is Possible with Regarding Allowed Energy Consumption Rate/Consumption

Service may be resumed (provided) when energy credits become available again.

Even if service is resumed, it may be determined/predicted that the energy consumption rate will not exceed the MECR. In this case (e.g., the UE moves to good network coverage), service may be resumed (provided).

NFs (e.g., AF, SMF, PCF, AMF, etc.) may receive relevant information from other NFs. Based on the received relevant information, the NF may make a judgment/prediction (that the MECR will not be exceeded) and/or a service resumption decision (or a decision that service provision is possible).

The relevant information received from the other NF(s) may include information indicating that "service resumption/provision is possible."

An NF (e.g., SMF, PCF, AF, etc.) may periodically receive/be informed of energy consumption rates/consumption from the other NF(s) (e.g., by subscribing to a provision/information service). This may be applied throughout this specification.

The other NF(s) may be a newly defined NF (e.g., Energy Efficiency NF, etc.).

The other NF(s) may be a conventional NF (e.g., UDR, NEF, NWDAF, PCF, UDM, SMF, AF, AMF, etc.).

Measuring energy consumption rates/consumption may be performed at various locations, such as the UE, NG-RAN, or a core network NF.

A newly defined NF (e.g., Energy Efficiency NF) may collect measurement results (measured energy consumption rate/consumption). Alternatively, a conventional NF (e.g., UDR, NEF, NWDAF, PCF, UDM, AMF, SMF, AF, etc.) may collect measurement results (measured energy consumption rate/consumption). Alternatively, multiple NFs may collect measurement results and report them to the final collecting NF.

Measuring energy consumption rate/consumption may be performed by multiple NFs. The measurement results (measured energy consumption rate/consumption) may be reported to the final collecting NF.

The unit (or level) of measurement (or collection) of energy consumption rate/consumption may correspond to the unit (level) at which the energy efficiency-related policy described in Section I is defined (applied) or may be the unit (level) required to apply the energy efficiency-related policy. These considerations may be applied throughout this specification.

**VI. A method for enabling a UE to use a specific RAT type/access type/core network to provide energy-efficient services.**

When a UE's energy usage exceeds a certain threshold (or when the overall network energy usage exceeds a certain threshold), a specific UE (or UEs belonging to a specific group) may be enabled to use a specific RAT type, access type, and/or core network to reduce the UE's (or network's) energy usage.

For example, even if a UE supports both E-UTRA and NR, the UE may be enabled to use only E-UTRA.

For example, a UE may be enabled to use only non-3GPP access.

For example, a UE may be enabled to use EPC instead of 5GC.

For example, even if a UE's subscriber information allows E-UTRA/NR, a specific NF (e.g., AMF) may override the UE's subscriber information and update RAT restrictions/core network type restrictions.

For example, if a UE is registered for an access type whose use is to be restricted, a deregistration procedure for the UE may be performed. A specific NF (e.g., AMF) may perform the deregistration procedure for the UE. Accordingly, the SMF may send a PDU session release command to the UE.

For example, if a UE is to use only non-3GPP access (to restrict the UE's use of 3GPP access), a deregistration for 3GPP access may be performed. A specific NF (e.g., AMF) may perform the deregistration for 3GPP access.

When performing a deregistration, the reason for performing the deregistration (e.g., various information/reasons provided to the UE in II-1 described above) may be provided to the UE.

If the UE performs registration through a restricted access type, the AMF may reject the registration request. At this time, the AMF may also provide the terminal with the reason for rejecting the registration request (e.g., various information/reasons provided to the UE in II-1 described above).

The aforementioned actions may be determined or performed based on a specific NF receiving information from another NF that the UE's energy usage exceeds a threshold.

If a specific NF (e.g., AMF) overrides the UE's subscriber information to update the RAT restriction/core network type restriction (or restricts the UE's access type), the specific NF may transmit information notifying other nodes (e.g., NG-RAN, AM-PCF, UE-PCF, etc.) of this fact. Then, based on this, the policy for the UE (e.g., the UE's URSP rule, RFSP index, etc.) may be updated.

Based on the information/request received from the AF, the aforementioned RAT type restriction/access type restriction/core network type restriction may be performed.

### VII. Method for changing a slice (or slice instance) of a PDU session to provide an energy-efficient service

Regarding the operation/procedure for changing a PDU session's slice, reference may be made to Section 5.15.19 (Support of Network Slice Replacement) and Section 5.15.20 (Support of Network Slice Instance Replacement) of TS 23.501 v18.2.1.

If the energy usage of a specific PDU session of a terminal exceeds a specific threshold, a specific NF (e.g., AMF, AM-PCF) may change the slice of the specific PDU session to reduce energy usage.

Another NF (e.g., Energy Efficiency NF, UDR, NEF, NWDAF, PCF, UDM, SMF, AF, etc.) may transmit information about the energy usage of a PDU session to the specific NF. Based on this information, the specific NF may make the decision (decision to change the slice of the specific PDU session).

Another NF (e.g., Energy Efficiency NF, UDR, NEF, NWDAF, PCF, UDM, SMF, AF, etc.) may instruct the specific NF (e.g., AMF) to replace a specific slice (or a specific slice instance) with another slice (or another slice instance).

At this time, the other NF may inform the AMF that the replacement of the specific slice (or slice instance) is for energy efficiency. Accordingly, if congestion occurs when the AMF performs the slice (or slice instance) replacement, the AMF may process the specific slice (or slice instance) later. For example, the AMF may preferentially replace other slices (or slice instances) (not for energy efficiency).

The aforementioned slice (or slice instance) replacement may be performed based on information/requests provided by the AF.

### VIII. PCF-based PDU session processing method for providing energy-efficient services (embodiment 10)

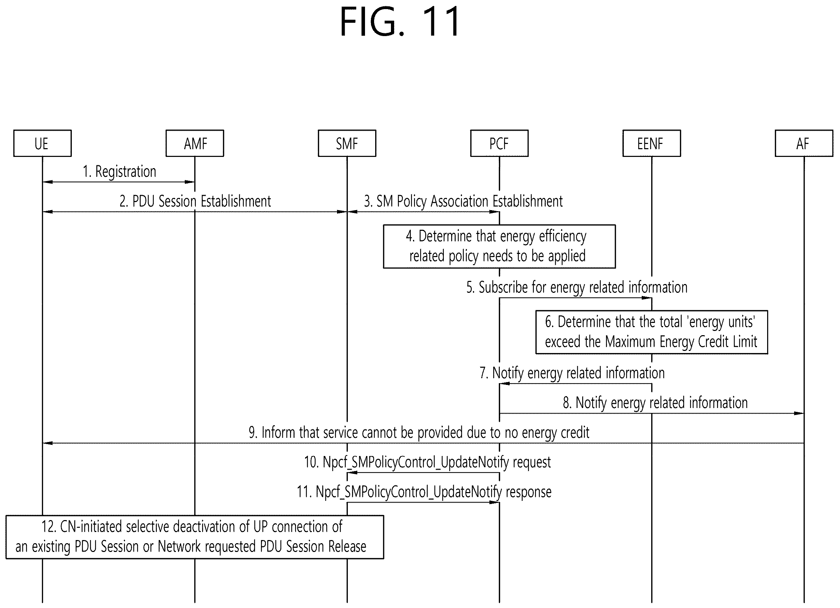

**FIG. 11** **shows a flowchart according to the tenth embodiment of the present specification.**

Step 1. The UE may perform a registration procedure. This registration procedure may be implemented in Section 4.2.2.2 of TS 23.502 v18.2.0 (Registration procedures) and FIGS. 6 and 7.

Step 2-3. The UE may perform a PDU session establishment procedure. It may then establish a session management (SM) policy association with the PCF. The PDU session establishment procedure may be implemented in Section 4.3.2.2 of TS 23.502 v18.2.0 (UE Requested PDU Session Establishment) and FIGS. 8 and 9.

Step 4. The PCF may determine that an energy efficiency policy should be applied to the PDU session (or the service provided by the PDU session).

The above decision may be made based on the information provided by the SMF (e.g., information provided through step 3 (e.g., UE location information, PDU session access type, etc.), subscriber information/policy (see Section I), service requirements/requests/instructions provided by the AF (see Sections I, II, III), operator policy, local policy/configuration, etc.). The subscriber information/policy may be obtained by the PCF from the UDR.

Step 5. The PCF may request the EENF (Energy Efficiency Network Function) to provide energy-related information (see Section IV). The PCF may subscribe to the EENF to receive notification of energy-related information.

If a legacy NF (e.g., NWDAF) rather than a newly defined NF provides energy-related information, the PCF may subscribe to the service with the legacy NF instead of the EENF.

Step 6. The EENF may recognize/determine/decide that the energy consumption rate/amount associated with the PDU session has exceeded (or is about to exceed) the permitted energy consumption rate/amount.

Step 7. The EENF may provide/notify the PCF with energy-related information.

The energy-related information may include information that the energy consumption rate/consumption amount related to the PDU session exceeds (or is about to exceed) the allowed energy consumption rate/consumption amount.

Step 8. The PCF may provide/notify the AF with energy-related information. The first embodiment of II-1 may be applied to the energy-related information.

The PCF may provide/notify the AF with energy-related information through the NEF.

The provision/notification described above may be performed based on a request from the AF.

Step 9. The AF may transmit an application layer message/signaling to the UE. The application layer message/signaling may include energy-related information provided/notified from the PCF/core network.

The energy-related information contained in the application layer messages/signaling may be provided/notified as received from the PCF/core network, or in modified/combined form (e.g., indicating service unavailability due to energy efficiency policies).

Step 10. The PCF may update policy information to the SMF. Alternatively, the SMF may modify the policy association with the PCF.

For this purpose, a new Policy Control Request Trigger (PCRT) may be defined. For example, the PCF may send a PCRT to the SMF to update policy information or modify the policy association.

Based on the aforementioned policy update/modification, the SMF may deactivate (or release) the PDU session. For example, the aforementioned policy update/modification may instruct the SMF to deactivate (or release) the PDU session.

When the aforementioned policy update/modification is performed, the PCF may also provide the SMF with information that the session-related energy consumption rate/consumption exceeds (or is about to exceed) the allowed energy consumption rate/consumption.

The above Instructions/information may be explicit, implicit, or implicit.

Based on various information, such as information provided by the SMF (e.g., UE location information, PDU session access type, etc.), subscriber information/policy (see Section I), service requirements/requests/instructions provided by the AF (see Sections I, II, and III), operator policies, local policies/configurations, and information provided by the EENF, the PCF may decide to deactivate or release the PDU session.

Step 11. The SMF may send a response to the PCF.

Steps 10-11 described above may be based on Section 4.16.5.2 (PCF initiated SM Policy Association Modification) of TS 23.502 v18.2.0.

Step 12. Based on the policy update/modification received from the PCF, the SMF may deactivate the user plane of the PDU session or release the PDU session.

Steps 10 and 8 described above may be performed in parallel. Alternatively, step 10 may be performed before step 8.

In Sections I through VII described above, the timing at which the AF provides information (or requests) may vary. For example, the timing at which the AF provides information (or requests) may be before or after the UE registers. For example, the timing at which the AF provides information (or requests) may be after the PDU session is created. For example, the timing at which the AF provides information (or requests) may be after the AF receives/receives energy consumption-related information (or information on energy efficiency-related policies) from the CN, as described in Sections II and III described above.

When the energy consumption rate/consumption used by the UE/user to receive the service exceeds or is about to exceed the allowable energy consumption rate/consumption, service provision may be made energy-efficient by restricting/gating the service.

Afterwards, when service provision/resumption to the UE/user becomes possible (e.g., when energy credits become available) from an energy-efficient perspective, this may be effectively performed.

The following actions may be performed:
- A UE may establish a PDU session.
- The AF may request the core network to notify it if the allowed energy consumption rate/consumption related to the PDU session has been exceeded or is about to be exceeded.
- If the SMF recognizes/judges/determines that the allowed energy consumption rate/consumption related to the PDU session has been exceeded or is about to be exceeded, it may decide to deactivate the user plane of the PDU session.
- The SMF may provide/notify the AF of information such as "the allowed energy consumption rate/consumption has been exceeded or is about to be exceeded" and/or "the resource is about to be released" and/or "the user plane of the PDU session is about to be deactivated" and/or "the service provision is about to be stopped" and/or "the service provision is not possible" and/or "the energy efficiency policy is about to be applied" and/or "the energy consumption rate" and/or "the remaining energy credit" and/or "the energy credit has been exhausted" and/or "the energy resource is insufficient."
- The AF that receives the above information may provide it to the UE through an application layer message/signaling, either in the form provided by the SMF/core network or in a modified or combined form (e.g., indicating that service provision is unavailable due to energy efficiency policies).
- The SMF may deactivate the user plane of a PDU session based on the User Plane Inactivity Report provided by the UPF (which the UPF provides to the SMF based on the Detection of PDU Session Inactivity for a specified period).
- If energy credits become available again or if it is determined/predicted that the energy consumption rate will not exceed the MECR even upon service resumption, the AF may notify the UE via application layer messages/signaling that service provision is possible/can be resumed and/or that a service request is possible.

The drawings below are created to illustrate specific examples of the present specification. The names of specific devices or names of specific signals/messages/fields depicted in the drawings are presented as examples, and therefore the technical features of the present specification are not limited to the specific names used in the drawings below.

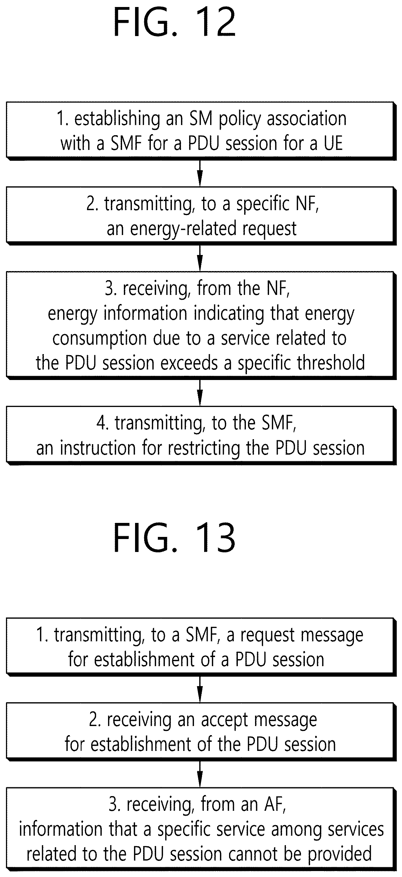

**FIG. 12** **shows the procedure of the PCF according to disclosure of the present specification.**
1. The PCF may establish an SM policy association with a Session Management Function (SMF) for a Packet Data Unit (PDU) session for a User Equipment (UE).
2. The PCF may transmit, to a specific Network Function (NF), an energy-related request.
3. The PCF may receive, from the NF, energy information indicating that energy consumption due to a service related to the PDU session exceeds a specific threshold.
   The energy information may be information determined by the NF based on the energy-related request.
4. The PCF may transmit, to the SMF, an instruction for restricting the PDU session based on the energy information.

The restricting may be least one of deactivating a user plane of the PDU session, releasing the PDU session, changing a slice of the PDU session, changing a access type of the PDU session, or changing a Radio Access Technology (RAT) type of the PDU session.

The specific NF may be an Energy Efficiency Network Function (EENF).

The specific NF may be a Network Data Analytics Function (NWDAF).

The PCF may determine to apply an energy-related policy to the PDU session based on one or more of the UE's location, subscriber information, subscriber policy, the access type of the PDU session, an operator policy, an Application Function (AF) request, or a local configuration.

The step of transmitting the energy-related request may be performed, based on the determining to apply the energy-related policy.

A unit of the energy consumption and a specific threshold value may be an energy consumption rate or energy consumption amount.

The PCF may receive, from an AF, a request for energy-related information.

The step of transmitting the energy-related request and the step of transmitting the instruction for restricting the PDU session may be performed based on the request for energy-related information.

The PCF may transmite, to the AF, the energy-related information.

The PCF may perform, based on the service related to the PDU session being restricted by the instruction, prediction that energy consumption due to the service related to the PDU session will not exceed the specific threshold even if the restricted service is resumed.

The PCF may determine resumption of the restricted service, based on the prediction.

The PCF may transmit, to the UE, a UE Route Selection Policy (URSP) rule to establish a PDU session for the restricted service, based on the determination of resumption of the restricted service.

The drawings below are created to illustrate specific examples of the present specification. The names of specific devices or names of specific signals/messages/fields depicted in the drawings are presented as examples, and therefore the technical features of the present specification are not limited to the specific names used in the drawings below.

**FIG. 13** **shows the procedure of the UE according to disclosure of the present specification.**
1. The UE may transmit, to a SMF, a request message for establishment of a PDU session.
2. The UE may receive an accept message for establishment of the PDU session, based on the request message.
3. The UE may receive, from an AF, information that a specific service among services related to the PDU session cannot be provided, based on energy consumption associated with the service related to the PDU session exceeding a specific threshold.

The UE may receive, from the SMF, a release message for the PDU session, based on energy consumption associated with the service related to the PDU session exceeding the specific threshold.

The UE may receive, from a PCF, a URSP rule, based on resumption of the specific service being determined.

The UE may transmit, to the SMF, a message requesting for establishment of a PDU session for the specific service, based on the URSP rule.

Hereinafter, an apparatus for performing communication according to some embodiments of the present specification will be described.

For example, a apparatus may include a processor, a transceiver, and a memory.

For example, a processor may be configured to be operably coupled with a memory and a processor.

The processor may perform: transmitting, to a SMF, a request message for establishment of a PDU session; receiving an accept message for establishment of the PDU session, based on the request message; and receiving, from an AF, information that a specific service among services related to the PDU session cannot be provided, based on energy consumption associated with the service related to the PDU session exceeding a specific threshold.

Hereinafter, a processor for providing communication according to some embodiments of the present specification will be described.

The processor is configured to: transmitting, to a SMF, a request message for establishment of a PDU session; receiving an accept message for establishment of the PDU session, based on the request message; and receiving, from an AF, information that a specific service among services related to the PDU session cannot be provided, based on energy consumption associated with the service related to the PDU session exceeding a specific threshold.

Hereinafter, a non-volatile computer readable medium storing one or more instructions for providing multicast service in wireless communication according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random access memory (SDRAM), read-only memory (ROM), or non-volatile random access memory (NVRAM). Read-only memory (EEPROM), flash memory, magnetic or optical data storage media, or other media that can be used to store instructions or data structures or Non-volatile computer readable media may also include combinations of the above.

Further, the methods described herein may be realized at least in part by computer-readable communication media that carry or carry code in the form of instructions or data structures and that can be accessed, read, and/or executed by a computer.

According to some embodiments of the present disclosure, a non-transitory computer-readable medium has one or more instructions stored thereon. The stored one or more instructions may be executed by a processor of the base station.

The stored one or more instructions cause the processors to: transmitting, to a SMF, a request message for establishment of a PDU session; receiving an accept message for establishment of the PDU session, based on the request message; and receiving, from an AF, information that a specific service among services related to the PDU session cannot be provided, based on energy consumption associated with the service related to the PDU session exceeding a specific threshold.

A non-volatile computer-readable medium storing one or more commands for providing mobile communication according to some embodiments of the present specification is described.

The present specification may have various effects.

For example, through the procedures disclosed in this specification, it is possible to provide services based on energy consumption.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method. Other implementations are within the scope of the following claims.

## Claims

1. A method for performing communication, performed by a Policy Control Function (PCF), comprising:
establishing an SM policy association with a Session Management Function (SMF) for a Packet Data Unit (PDU) session for a User Equipment (UE);
transmitting, to a specific Network Function (NF), an energy-related request;
receiving, from the NF, energy information indicating that energy consumption due to a service related to the PDU session exceeds a specific threshold; and
wherein the energy information is information determined by the NF based on the energy-related request,
transmitting, to the SMF, an instruction for restricting the PDU session based on the energy information.

2. The method of claim 1,
wherein the restricting is least one of deactivating a user plane of the PDU session, releasing the PDU session, changing a slice of the PDU session, changing a access type of the PDU session, or changing a Radio Access Technology (RAT) type of the PDU session.

3. The method of claim 1 or claim 2,
wherein the specific NF is an Energy Efficiency Network Function (EENF).

4. The method of claim 1 or claim 2,
wherein the specific NF is a Network Data Analytics Function (NWDAF).

5. The method of one of the claims 1 to 4, further comprising:
determining to apply an energy-related policy to the PDU session based on one or more of the UE's location, subscriber information, subscriber policy, the access type of the PDU session, an operator policy, an Application Function (AF) request, or a local configuration,
wherein the step of transmitting the energy-related request is performed, based on the determining to apply the energy-related policy.

6. The method of one of the claims 1 to 5,
wherein a unit of the energy consumption and a specific threshold value are an energy consumption rate or energy consumption amount.

7. The method of one of the claims 1 to 6, further comprising:
receiving, from an AF, a request for energy-related information; and
wherein the step of transmitting the energy-related request and the step of transmitting the instruction for restricting the PDU session are performed based on the request for energy-related information,
transmitting, to the AF, the energy-related information.

8. The method of one of the claims 1 to 7, further comprising:
performing, based on the service related to the PDU session being restricted by the instruction, prediction that energy consumption due to the service related to the PDU session will not exceed the specific threshold even if the restricted service is resumed;
determining resumption of the restricted service, based on the prediction; and
transmitting, to the UE, a UE Route Selection Policy (URSP) rule to establish a PDU session for the restricted service, based on the determination of resumption of the restricted service.

9. A method for performing communication, performed by a UE, comprising:
transmitting, to a SMF, a request message for establishment of a PDU session;
receiving an accept message for establishment of the PDU session, based on the request message; and
receiving, from an AF, information that a specific service among services related to the PDU session cannot be provided, based on energy consumption associated with the service related to the PDU session exceeding a specific threshold.

10. The method of claim 9, further comprising:
receiving, from the SMF, a release message for the PDU session, based on energy consumption associated with the service related to the PDU session exceeding the specific threshold.

11. The method of claim 9 or claim 10, further comprising:
receiving, from a PCF, a URSP rule, based on resumption of the specific service being determined;
transmitting, to the SMF, a message requesting for establishment of a PDU session for the specific service, based on the URSP rule.

12. A PCF, to perform communication, comprising:
a transceiver; and
a processor,
wherein the processor performs operation that is a method of one of the claims 1 to 8.

13. A UE, to perform communication, comprising:
a transceiver; and
a processor,
wherein the processor performs operation that is a method of one of the claims 9 to 11.

14. An apparatus in mobile communication, comprising:
at least one processor; and
at least one memory storing instructions and operably electrically connectable with the at least one processor,
wherein, based on the instructions being operated by the at least one processor, the instructions perform operation that is a method of one of the claims 9 to 11.

15. A non-volatile computer readable storage medium having recorded instructions,
wherein the instructions, based on being executed by one or more processors, cause the one or more processors to perform operation that is a method of one of the claims 9 to 11.
